# EUROPEAN PATENT APPLICATION

(11) **EP 4 564 955 A1**
(43) Date of publication of application: **04.06.2025**
(21) Application number: 22952430.1
(22) Date of filing: 28.07.2022
(51) Int. Cl.: H04W 72/04, H04L 5/00

(54) **COMMUNICATION METHOD AND STATION**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); HUANG, Lei, Singapore 049483 (SG)
(74) Representative: RGTH
(86) International application number: PCT/CN2022/108762
(87) International publication number: WO 2024/020973

(57) **Abstract**

The present application provides a communication method and a station. The communication method includes: transmitting and/or receiving, by a station, first information, where the first information is used to indicate bandwidth information and/or punctured information of a transmission resource. In embodiments of the present application, the communication bandwidth can be expanded by indicating the bandwidth information and/or punctured information of the transmission resource.

## Description

### TECHNICAL FIELD

The present application relates to the field of communications, and in particular, to a communication method and a station.

### BACKGROUND

With the development of augmented reality (AR), virtual reality (VR), mixed reality (MR) and Internet of Things, there may be a large number of wireless communication devices such as wireless fidelity (Wi-Fi) devices accessed. Based on the maximum channel bandwidth supported by the current communication system, a next generation Wi-Fi communication bandwidth may be expanded. Under a new channel bandwidth, a physical layer protocol data unit (PPDU) and a corresponding bandwidth signaling indication have not yet been determined.

### SUMMARY

Embodiments of the present application provide a communication method, including:
transmitting and/or receiving, by a station, first information, where the first information is used to indicate bandwidth information and/or punctured information of a transmission resource.

Embodiments of the present application provide a station, including:
a processing unit configured to transmit and/or receive first information, where the first information is used to indicate bandwidth information and/or punctured information of a transmission resource.

Embodiments of the present application provide a communication device, including a processor and a memory. The memory is configured to store a computer program, and the processor is configured to call the computer program stored in the memory and run the computer program, so as to enable the communication device to perform the above communication method.

Embodiments of the present application provide a chip, configured to implement the above-mentioned communication method.

Specifically, the chip includes: a processor which is configured to call a computer program from a memory and run the computer program, so as to enable a device equipped with the chip to perform the above-mentioned communication method.

Embodiments of the present application provide a computer-readable storage medium, configured to store a computer program. When being run by a device, the computer program enables the device to perform the above-mentioned communication method.

Embodiments of the present application provide a computer program product, including computer program instructions. The computer program instructions enable a computer to perform the above-mentioned communication method.

Embodiments of the present application provide a computer program. When being run on a computer, the computer program enables the computer to perform the above-mentioned communication method.

The embodiments of the present application can expand the communication bandwidth by indicating the bandwidth information and/or the punctured information of the transmission resource.

### BRIEF DESCRIPTION OF THE DRAWINGS

FIG. 1 is a schematic diagram of an application scenario according to the embodiments of the present application.
FIG. 2 is a schematic diagram of an EHT MU PPDU format according to the embodiments of the present application.
FIG. 3 is a schematic diagram of an EHT TB PPDU format according to the embodiments of the present application.
FIG. 4 is a schematic flowchart of a communication method according to the embodiments of the present application.
FIG. 5 is a schematic block diagram of a station according to an embodiment of the present application.
FIG. 6 is a schematic diagram of a UHR MU PPDU format according to the embodiments of the present application.
FIG. 7 is a schematic diagram of a UHR TB PPDU format according to the embodiments of the present application.
FIG. 8 is a schematic block diagram of a communication device according to the embodiments of the present application.
FIG. 9 is a schematic block diagram of a chip according to the embodiments of the present application.
FIG. 10 is a schematic block diagram of a communication system according to the embodiments of the present application.

### DETAILED DESCRIPTION

Technical solutions in embodiments of the present application will be described below with reference to the drawings in the embodiments of the present application.

The technical solutions in the embodiments of the present application may be applied to various communication systems, such as a wireless local area network (WLAN), a wireless fidelity (WiFi) or other communication systems.

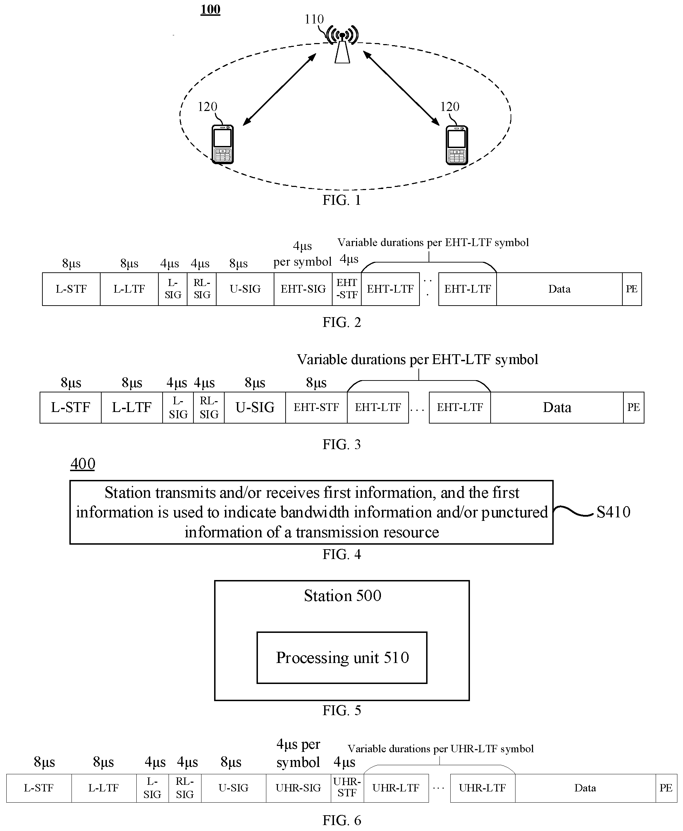

For example, a communication system 100 applied in the embodiments of the present application is shown in FIG. 1. The communication system 100 may include an access point (AP) 110 and stations (STAs) 120 accessing a network through the access point 110.

In some scenarios, the AP is also called an AP STA. That is, in a sense, the AP is also a STA.

In some scenarios, the STA is also called a non-AP STA.

The communication in the communication system 100 may be communication between an AP and a non-AP STA, communication between a non-AP STA and a non-AP STA, or communication between a STA and a peer STA. The peer STA may refer to a device that performs peer-to-peer communication with the STA. For example, the peer STA may be an AP or a non-AP STA.

The AP is equivalent to a bridge for connecting a wired network and a wireless network. The main function is to connect various wireless network clients together and then allow the wireless network access to Ethernet. An AP device may be a terminal device (such as a mobile phone) or a network device (such as a router). The terminal device or the network device has a chip for implementing a communication function, such as a WLAN or WiFi chip.

It should be understood that a role of a STA in the communication system is not absolute. For example, in some scenarios, when a mobile phone is connected to a router, the mobile phone is a non-AP STA. When the mobile phone serves as a hotspot for other mobile phones, the mobile phone plays a role of the AP.

The AP and the non-AP STA may be devices used in Internet of Vehicles, IoT nodes and sensors used in the Internet of Things (IoT), smart cameras, smart remote controls, smart water and electricity meters used in smart homes, and sensors used in smart cities.

In some embodiments, the non-AP STA may support the 802.11be standard. The non-AP STA may also support various current and future 802.11 family wireless local area networks (WLAN) standards such as 802.11ax, 802.11ac, 802.11n, 802.11g, 802.11b and 802.11a.

In some embodiments, the AP may be a device that supports the 802.11be standard. The AP may also be a device that supports various current and future 802.11 family WLAN standards such as 802.11ax, 802.11ac, 802.11n, 802.11g, 802.11b and 802.11a.

In the embodiments of the present application, the STA may be a mobile phone, a pad, a computer, a virtual reality (VR) device, an augmented reality (AR) device, a wireless device in industrial control, a set-top box, a wireless device in self-driving, a vehicle-mounted communication device, a wireless device in remote medical, a wireless device in smart grid, a wireless device in transportation safety, a wireless device in smart city, or a wireless device in smart home, a wireless communication chip/ASIC/SOC, etc., that supports the WLAN/WiFi technology.

Frequency bands supported by the WLAN technology may include but are not limited to: low frequency bands (e.g., 2.4 GHz, 5 GHz, and 6 GHz) and high frequency bands (e.g., 45 GHz, and 60 GHz).

FIG. 1 exemplarily shows an AP STA and two non-AP STAs. Optionally, the communication system 100 may include a plurality of AP STAs and other numbers of non-AP STAs, which is not limited in the embodiments of the present application.

It should be understood that, the terms "system" and "network" herein are often used interchangeably herein. The term "and/or" herein is merely an association relationship for describing associated objects, and indicates that there may be three relationships. For example, "A and/or B" may represent that: A exists alone, both A and B exist, and B exists alone. In addition, the character "/" herein generally indicates that associated objects before and after this character are in an "or" relationship.

It should be understood that, the term "indicate" mentioned in the embodiments of the present application may mean a direct indication or an indirect indication, or represent that there is an association relationship. For example, A indicating B may mean that A directly indicates B (e.g., B may be obtained through A); or mean that A indirectly indicates B (e.g., A indicates C, and B may be obtained through C); or mean that there is an association relationship between A and B.

In the description of the embodiments of the present application, the term "correspond" may mean that there is a relationship of direct correspondence or indirect correspondence between the two, or there is an association relationship between the two, or there is a relationship of indicating and being indicated, or configuring and being configured, or the like.

To facilitate understanding of the technical solutions in the embodiments of the present application, the related art of the embodiments of the present application are described below. The following related art, as optional solutions, may be arbitrarily combined with the technical solutions in the embodiments of the present application, and they all belong to the protection scope of the embodiments of the present application.

### (1) A correspondence relationship between a bandwidth and a resource unit (RU) size

| **Bandwidth** | **RU size** |
|---|---|
| 20 MHz | 242-tone |
| 40 MHz | 484-tone |
| 80 MHz | 996-tone |
| 160 MHz | 2×996-tone |
| 320 MHz | 4×996-tone |

### (2) PPDU format

The extremely high throughput (EHT) physical layer protocol data unit (PPDU) has two forms: an EHT multi-user (MU) PPDU and an EHT trigger based (TB) PPDU.

### (a) EHT MU PPDU

A format of the EHT MU PPDU is shown in FIG. 2 and is used to transmit to one or more users. In the EHT MU PPDU, the non-HT short training field (L-STF), the non-HT long training field (L-LTF), the non-HT signal field (L-SIG), the universal signal field (U-SIG) and the EHT signal field (EHT-SIG) are called pre-EHT modulation fields; and the EHT short training field (EHT-STF), the EHT long training field (EHT-LTF), the data and the packet extension field (PE) are called EHT modulation fields.

### (b) EHT TB PPDU

A format of the EHT TB PPDU is shown in FIG. 3 and is used to transmit a response trigger frame from an AP. In the EHT TB PPDU, the L-STF, the L-LTF, the L-SIG and the U-SIG are called pre-EHT modulation fields; and the EHT-STF, the EHT-LTF, the data and the PE are called EHT modulation fields. A duration of the EHT-STF field in the EHT TB PPDU is twice a duration of the EHT-STF field in the EHT MU PPDU.

### (3) U-SIG field in EHT PPDU indicating a bandwidth

The U-SIG field carries information required for decoding the EHT PPDU, and includes U-SIG-1 and U-SIG-2. Contents of the U-SIG field in the EHT MU PPDU are shown in the following table. B0 to B 19 here are a version independent field, and remaining bits are a version dependent field. Regardless of a version of the physical layer (PHY), the PHY reports the version independent field to the medium access control (MAC) layer.

Referring to Table 1, for an indication of a bandwidth, a Bandwidth subfield occupies 3 bits in total, where values 0 to 5 indicate bandwidths of 20 MHz, 40 MHz, 80 MHz, 160 MHz, 320-1 MHz and 320-2 MHz, respectively. These values cannot be used to indicate other types of bandwidths. In addition, the Bandwidth subfield belongs to the version independent field, and thus after detecting the EHT MU PPDU, a legacy STA will still report the bandwidth information to the MAC layer.

**Table 1**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | | | | Set to 0 for EHT. Values 1 to 7 are Validate. |
| | | | | (Distinguish between different PHY charters. |
| | | | | EHT is set to 0. Values 1 to 7 are valid). |
| | B3 to B5 | Bandwidth | 3 | Set to 0 for 20 MHz. |
| | | | | Set to 1 for 40 MHz. |
| | | | | Set to 2 for 80 MHz. |
| | | | | Set to 3 for 160 MHz. |
| | | | | Set to 4 for 320 MHz-1. |
| | | | | Set to 5 for 320 MHz-2. |
| | | | | Values 6 and 7 are Validate. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B24 | Disregard | 5 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

FIG. 4 is a schematic flowchart of a communication method 400 according to an embodiment of the present application. The method may optionally be applied to the system shown in FIG. 1, but is not limited thereto. The method includes at least part of the following contents.

In S410, a station transmits and/or receives first information, where the first information is used to indicate bandwidth information and/or punctured information of a transmission resource.

In the embodiments of the present application, the station may be an AP STA or a non-AP STA. A first station may transmit the first information to a second station. The first station may also receive the first information from the second station. The first information may be carried in a data packet.

In an implementation, the data packet transmitted by the transmission resource is a PPDU. The PPDU may be an ultra-high reliability (UHR) PPDU, such as a non-orthogonal frequency division multiple access (non-OFDMA) UHR PPDU.

In an implementation, the first information includes first bandwidth indication information and/or second bandwidth indication information.

In the embodiments of the present application, a piece of indication information may be used to indicate a bandwidth of the transmission resource, or two pieces of indication information may be combined to jointly indicate the bandwidth of the transmission resource. For example, the PPDU includes the first bandwidth indication information and/or the second bandwidth indication information, and the first bandwidth indication information and/or the second bandwidth indication information may indicate the bandwidth of the transmission resource of the PPDU.

In an implementation, the first bandwidth indication information and/or the second bandwidth indication information are used to indicate the bandwidth information of the transmission resource, and the transmission resource is used to transmit the data packet.

In an implementation, a manner of the first information indicating newly added bandwidth information includes at least one of:
that a value of the first bandwidth indication information indicates the newly added bandwidth information;
that a value of the second bandwidth indication information indicates the newly added bandwidth information; or
that combined value(s) constituted by the value of the first bandwidth indication information and the value of the second bandwidth indication information indicate the newly added bandwidth information; where the number of the combined values is the same as the number of the newly added bandwidths.

In the embodiments of the present application, the newly added bandwidth may also be referred to as a newly added channel bandwidth, and the newly added bandwidth may include a newly added bandwidth based on the maximum bandwidth or the relatively large bandwidth in the related art. For example, the maximum bandwidth of a 5 GHz frequency band is 160 MHz. The maximum bandwidth of a 6 GHz frequency band is 320 MHz. The newly added bandwidth may be greater than the maximum bandwidth. The newly added bandwidth may also be greater than the relatively large bandwidth, for example, greater than the relatively large bandwidth of 160 MHz in the 6 GHz frequency band. For example, the newly added bandwidth may be 240 MHz, 480 MHz or 640 MHz in the 5 GHz frequency band. As another example, the newly added bandwidth may be 240 MHz, 480 MHz or 640 MHz in the 6 GHz frequency band. The newly added bandwidth may alternatively be other values. In addition, the first bandwidth indication information and/or the second bandwidth indication information may also be compatible with other bandwidths in the related art. The second bandwidth indication information may be extension indication information, and the number of bits occupied by the second bandwidth indication information may be flexibly set based on the number of bandwidth types that need to be indicated.

In an implementation, the value of the first bandwidth indication information includes an unoccupied value and/or an occupied related bandwidth value.

In the embodiments of the present application, the unoccupied value may include one or more reserved values, and the occupied related bandwidth value may include values that have been used to indicate other bandwidths. The related bandwidth may have a certain relationship with the newly added bandwidth. For example, the related bandwidth may include a relatively large bandwidth, such as a bandwidth greater than a certain set value. The occupied related bandwidth value may be modified to indicate the newly added bandwidth information, or the occupied related bandwidth value may be used to be combined with other values to jointly indicate the newly added bandwidth information. For example, the related bandwidth value is 3, which usually indicates a related bandwidth of 160 MHz. In the embodiments of the present application, the value 3 may be used to indicate 240 MHz. Thus, in a device supporting 240 MHz, the value 3 may indicate 240 MHz alone or in combination, and in a device not supporting 240 MHz, the value 3 may be compatible with indicating 160 MHz. This is conducive to compatibility with other bandwidths in related art.

In an implementation, a manner of the first information indicating a type of newly added bandwidth information includes at least one of:
that an unoccupied value of the first bandwidth indication information indicates a first bandwidth;
that a value of the second bandwidth indication information indicates the first bandwidth;
that a combined value constituted by the unoccupied value of the first bandwidth indication information and the value of the second bandwidth indication information indicates the first bandwidth; or
that a combined value constituted by the related bandwidth value of the first bandwidth indication information and the value of the second bandwidth indication information indicates the first bandwidth.

In the embodiments of the present application, if the newly added bandwidths that need to be indicated have the small number such as 1 or 2, the unoccupied value, that is, the reserved value, of the first bandwidth indication information may be directly used to indicate the newly added bandwidth information, such as the first bandwidth. Alternatively, a value of the extended second bandwidth indication information may be used to indicate the newly added bandwidth information, such as the first bandwidth. In addition, the first bandwidth indication information and the second bandwidth indication information may be used to jointly indicate the newly added bandwidth information. For example, the first bandwidth indication information is a bandwidth subfield, a value of the bandwidth subfield is 6, and a value of the second bandwidth indication information is 0, which may indicate the first bandwidth.

In an implementation, a manner of the first information indicating two types of newly added bandwidth information includes at least one of:
that unoccupied values of the first bandwidth indication information indicate a first bandwidth and a second bandwidth, respectively;
that values of the second bandwidth indication information indicate the first bandwidth and the second bandwidth, respectively;
that two combined values constituted by the unoccupied values of the first bandwidth indication information and a value of the second bandwidth indication information indicate the first bandwidth and the second bandwidth, respectively; or
that two combined values constituted by related bandwidth values of the first bandwidth indication information and a value of the second bandwidth indication information indicate the first bandwidth and the second bandwidth, respectively.

In the embodiments of the present application, in a case where the first information needs to be used to indicate a plurality of types of, such as two types of, newly added bandwidth information, a plurality of values need to be used to indicate different bandwidths. For example, the first bandwidth indication information is a bandwidth subfield, values of the bandwidth subfield are reserved values 6 and 7, indicating the first bandwidth and the second bandwidth, respectively. As another example, the second bandwidth indication information is a bandwidth extension subfield, values of the bandwidth extension subfield are 0 and 1, indicating the first bandwidth and the second bandwidth, respectively. As another example, values of the bandwidth subfield are reserved values 6 and 7, and a value of the bandwidth extension subfield is 0, indicating the first bandwidth and the second bandwidth, respectively. As another example, values of the bandwidth subfield are values 4 and 5 of the related bandwidths 320 MHz-1 and 320 MHz-1, and a value of the bandwidth extension subfield is 0, indicating the first bandwidth and the second bandwidth, respectively.

In the embodiments of the present application, if the first bandwidth indication information has sufficient unoccupied values, the first bandwidth indication information may be used to separately indicate more, for example, three, four or five pieces of, newly added bandwidth information. If the first bandwidth indication information has not enough unoccupied values, for example, only two unoccupied values, the first bandwidth indication information may be used to indicate some of the newly added bandwidth information, and the extended second bandwidth indication information may be used to indicate the rest of the newly added bandwidth information. In addition, the first bandwidth indication information and the second bandwidth indication information may be used to form a required number of combined values to jointly indicate the newly added bandwidth information.

In an implementation, a manner of the first information indicating three types of newly added bandwidth information includes at least one of:
that three combined values constituted by unoccupied values of the first bandwidth indication information and values of the second bandwidth indication information indicate a first bandwidth, a second bandwidth and a third bandwidth, respectively; or
that three combined values constituted by related bandwidth values of the first bandwidth indication information and a value of the second bandwidth indication information indicate the first bandwidth, the second bandwidth and the third bandwidth, respectively.

For example, the first bandwidth indication information is a bandwidth subfield, and the second bandwidth indication information is a bandwidth extension subfield. Values of the bandwidth subfield are reserved values 6 and 7, and a value of the bandwidth extension subfield is 1, indicating the first bandwidth and the second bandwidth, respectively. A value of the bandwidth subfield is a reserved value 6, and a value of the bandwidth extension subfield is 0, indicating the third bandwidth. As another example, values of the bandwidth subfield are values 3, 4 and 5 of the related bandwidths 160 MHz, 320 MHz-1 and 320 MHz-1, and a value of the bandwidth extension subfield is 0, indicating the first bandwidth, the second bandwidth and the third bandwidth, respectively.

In an implementation, a manner of the first information indicating four types of newly added bandwidth information includes at least one of:
that four combined values constituted by unoccupied values of the first bandwidth indication information and an at least 1-bit value of the second bandwidth indication information indicate a first bandwidth, a second bandwidth, a third bandwidth and a fourth bandwidth, respectively; or
that four combined values constituted by related bandwidth values of the first bandwidth indication information and an at least 2-bit value of the second bandwidth indication information indicate the first bandwidth, the second bandwidth, the third bandwidth and the fourth bandwidth, respectively.

For example, the first bandwidth indication information is a bandwidth subfield, and the second bandwidth indication information is a bandwidth extension subfield. Values of the bandwidth subfield are reserved values 6 and 7, and a value of the bandwidth extension subfield is 1, indicating the first bandwidth and the second bandwidth, respectively. Values of the bandwidth subfield are reserved values 6 and 7, and a value of the bandwidth extension subfield is 0, indicating the third bandwidth and the fourth bandwidth, respectively. As another example, values of the bandwidth subfield are values 4 and 5 of the related bandwidths 320 MHz-1 and 320 MHz-1, and a value of the bandwidth extension subfield is 0, indicating the first bandwidth and the second bandwidth, respectively. Values of the bandwidth subfield are values 4 and 5 of the related bandwidths 320 MHz-1 and 320 MHz-1, and a value of the bandwidth extension subfield is 1, indicating the third bandwidth and the fourth bandwidth, respectively. The bandwidth extension subfield may take values other than 0 and 1 to be compatible with other bandwidths. In this case, the bandwidth extension subfield requires at least 2 bits.

In an implementation, a manner of the first information indicating five types of newly added bandwidth information includes at least one of:
that five combined values constituted by unoccupied values of the first bandwidth indication information, related bandwidth values of the first bandwidth indication information, and an at least 1-bit value of the second bandwidth indication information indicate a first bandwidth, a second bandwidth, a third bandwidth, a fourth bandwidth and a fifth bandwidth, respectively;
that five combined values constituted by unoccupied values of the first bandwidth indication information and an at least 2-bit value of the second bandwidth indication information indicate the first bandwidth, the second bandwidth, the third bandwidth, the fourth bandwidth, and the fifth bandwidth respectively; or
that five combined values constituted by related bandwidth values of the first bandwidth indication information and an at least 2-bit value of the second bandwidth indication information indicate the first bandwidth, the second bandwidth, the third bandwidth, the fourth bandwidth and the fifth bandwidth respectively.

For example, the first bandwidth indication information is a bandwidth subfield, and the second bandwidth indication information is a bandwidth extension subfield. Values of the bandwidth subfield are reserved values 6 and 7, and a value of the bandwidth extension subfield is 1, indicating the first bandwidth and the second bandwidth, respectively. Values of the bandwidth subfield are values 0, 1 and 2 of the related bandwidths 20 MHz, 40 MHz and 60 MHz, and a value of the bandwidth extension subfield is 0, indicating the third bandwidth, the fourth bandwidth and the fifth bandwidth, respectively.

As another example, values of the bandwidth subfield are reserved values 6 and 7, and a value of the bandwidth extension subfield is 0, indicating the first bandwidth and the second bandwidth, respectively. Values of the bandwidth subfield are reserved values 6 and 7, and a value of the bandwidth extension subfield is 1, indicating the third bandwidth and the fourth bandwidth, respectively. A value of the bandwidth subfield is a reserved value 6, and a value of the bandwidth extension subfield is 2, indicating the fifth bandwidth.

As another example, values of the bandwidth subfield are values 3, 4 and 5 of the related bandwidths 160 MHz, 320 MHz-1 and 320 MHz-1, and a value of the bandwidth extension subfield is 0, indicating the first bandwidth, the second bandwidth and the third bandwidth, respectively. Values of the bandwidth subfield are 4 and 5, and a value of the bandwidth extension subfield is 1, indicating the fourth bandwidth and the fifth bandwidth, respectively.

In the embodiments of the present disclosure, values of the indication information or the subfield being 0, 1, 2, 3, 5, 6 or 7 are merely examples and not limitations, and other values may be used in actual applications.

In an implementation, the bandwidth information of the transmission resource includes at least one of the following newly added bandwidth information:
a bandwidth of a 240 MHz channel, a bandwidth of a 480 MHz channel, or a bandwidth of a 640 MHz channel.

In an embodiment, the 240 MHz channel includes three adjacent 80 MHz channels.

In an implementation, of the 240 MHz channel, a first sub-channel is a primary 80 MHz channel, two second sub-channels are a first secondary 80 MHz channel and a second secondary 80 MHz channel, and the primary 80 MHz channel includes a primary 20 MHz channel. The primary 80 MHz channel may indicate a primary channel with a bandwidth of 80 MHz. The primary 20 MHz channel may indicate a primary channel with a bandwidth of 20 MHz. The first secondary 80 MHz channel may indicate a first secondary channel with a bandwidth of 80 MHz. The second secondary 80 MHz channel may indicate a second secondary channel with a bandwidth of 80 MHz.

In an implementation, of the 240 MHz channel, a first sub-channel is a primary 160 MHz channel, a second sub-channel is a secondary 80 MHz channel, and the primary 160 MHz channel includes a primary 20 MHz channel. The primary 160 MHz channel may indicate a primary channel with a bandwidth of 160 MHz. The secondary 80 MHz channel may indicate a secondary channel with a bandwidth of 80 MHz.

In an implementation, a bandwidth of the 480 MHz channel includes a bandwidth of a first 480 MHz channel (which may be recorded as 480 MHz-1) and a bandwidth of a second 480 MHz channel (which may be recorded as 480 MHz-2).

In an embodiment, the 480 MHz channel includes three adjacent 160 MHz channels.

In an implementation, of the 480 MHz channel, a first sub-channel is a primary 320 MHz channel, two second sub-channels are a first secondary 80 MHz channel and a second secondary 80 MHz channel, and the primary 320 MHz channel includes a primary 20 MHz channel.

In an implementation, a channel center frequency index of the first 480 MHz channel is 47 or 143; alternatively, a channel center frequency index of the second 480 MHz channel is 79 or 175.

In an implementation, a bandwidth of the 640 MHz channel includes a bandwidth of a first 640 MHz channel (which may be recorded as 640 MHz-1) and a bandwidth of a second 640 MHz channel (which may be recorded as 640 MHz-1).

In an embodiment, the 640 MHz channel includes four adjacent 160 MHz channels.

In an implementation, of the 640 MHz channel, a first sub-channel is a primary 320 MHz channel, a second sub-channel is a secondary 320 MHz channel, and the primary 320 MHz channel includes a primary 20 MHz channel.

In an implementation, a channel center frequency index of the first 640 MHz channel is 63, and a center frequency index of the second 640 MHz channel is 159.

In an implementation, a manner of the first information indicating the bandwidth of the 240 MHz channel includes at least one of:
that an unoccupied value of the first bandwidth indication information indicates the bandwidth of the 240 MHz channel;
that a value of the second bandwidth indication information indicates the bandwidth of the 240 MHz channel;
that the unoccupied value of the first bandwidth indication information and the value of the second bandwidth indication information jointly indicate the bandwidth of the 240 MHz channel; or
that a related bandwidth value of the first bandwidth indication information and the value of the second bandwidth indication information jointly indicate the bandwidth of the 240 MHz channel.

For example, the unoccupied value 6 or 7 of the first bandwidth indication information indicates 240 MHz. As another example, the value 0 or 1 of the first bandwidth indication information indicates 240 MHz. As another example, the unoccupied value 6 or 7 of the first bandwidth indication information and the value 0 or 1 of the first bandwidth indication information indicate 240 MHz. As another example, the related bandwidth value 5 of the first bandwidth indication information and the value 0 or 1 of the first bandwidth indication information indicate 240 MHz.

In an implementation, a manner of the first information indicating the bandwidth of the 480 MHz channel includes at least one of:
that two unoccupied values of the first bandwidth indication information indicate the bandwidth of the first 480 MHz channel and the bandwidth of the second 480 MHz channel, respectively;
that values of the second bandwidth indication information indicate the bandwidth of the first 480 MHz channel and the bandwidth of the second 480 MHz channel, respectively;
that two combined values constituted by the two unoccupied values of the first bandwidth indication information and the value of the second bandwidth indication information indicate the bandwidth of the first 480 MHz channel and the bandwidth of the second 480 MHz channel, respectively; or
that two combined values constituted by two related bandwidth values of the first bandwidth indication information and the value of the second bandwidth indication information indicate the bandwidth of the first 480 MHz channel and the bandwidth of the second 480 MHz channel, respectively.

For example, the two unoccupied values 6 and 7 of the first bandwidth indication information indicate 480 MHz-1 and 480 MHz-2, respectively. As another example, the values 0 and 1 of the first bandwidth indication information indicate 480 MHz-1 and 480 MHz-2, respectively. As another example, the two unoccupied values 6 or 7 of the first bandwidth indication information and the value 0 or 1 of the firstbandwidth indication information indicate 480 MHz-1 and 480 MHz-2, respectively. As another example, the two related bandwidth values 4 and 5 of the first bandwidth indication information and the value 0 or 1 of the first bandwidth indication information indicate 480 MHz-1 and 480 MHz-2, respectively.

In an implementation, a manner of the first information indicating the bandwidth of the 640 MHz channel includes at least one of:
that two unoccupied values of the first bandwidth indication information indicate the bandwidth of the first 640 MHz channel and the bandwidth of the second 640 MHz channel, respectively;
that values of the second bandwidth indication information indicate the bandwidth of the first 640 MHz channel and the bandwidth of the second 640 MHz channel, respectively;
that two combined values constituted by the two unoccupied values of the first bandwidth indication information and the value of the second bandwidth indication information indicate the bandwidth of the first 640 MHz channel and the bandwidth of the second 640 MHz channel, respectively; or
that two combined values constituted by two related bandwidth values of the first bandwidth indication information and the value of the second bandwidth indication information indicate the bandwidth of the first 640 MHz channel and the bandwidth of the second 640 MHz channel, respectively.

For example, the two unoccupied values 6 and 7 of the first bandwidth indication information indicate 640 MHz-1 and 640 MHz-2, respectively. As another example, the values 0 and 1 of the first bandwidth indication information indicate 640 MHz-1 and 640 MHz-2, respectively. As another example, the two unoccupied values 6 or 7 of the first bandwidth indication information and the value 0 or 1 of the first bandwidth indication information indicate 640 MHz-1 and 640 MHz-2, respectively. As another example, the two related bandwidth values 4 and 5 of the first bandwidth indication information and the value 0 or 1 of the second bandwidth indication information indicate 640 MHz-1 and 640 MHz-2, respectively.

In an implementation, a manner of the first information indicating the bandwidth of the 240 MHz channel and the bandwidth of the 480 MHz channel includes at least one of:
that three combined values constituted by two unoccupied values of the first bandwidth indication information and a 1-bit value of the second bandwidth indication information indicate the bandwidth of the 240 MHz channel, the bandwidth of the first 480 MHz channel, and the bandwidth of the second 480 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 480 MHz channel, and the bandwidth of the second 480 MHz channel, respectively.

For example, the two unoccupied values 6 and 7 of the first bandwidth indication information and the value 0 of the second bandwidth indication information indicate 480 MHz-1 and 480 MHz-2, respectively; and the two unoccupied values 6 of the first bandwidth indication information and the value 1 of the second bandwidth indication information indicate 240 MHz. As another example, the two related bandwidth values 4 and 5 of the first bandwidth indication information and the value 0 of the second bandwidth indication information indicate 480 MHz-1 and 480 MHz-2, respectively; and the two related bandwidth values 4 or 5 of the first bandwidth indication information and the value 1 of the second bandwidth indication information indicate 240 MHz.

In an implementation, a manner of the first information indicating the bandwidth of the 240 MHz channel and the bandwidth of the 640 MHz channel includes at least one of:
that three combined values constituted by two unoccupied values of the first bandwidth indication information and a 1-bit value of the second bandwidth indication information indicate the bandwidth of the 240 MHz channel, the bandwidth of the first 640 MHz channel, and the bandwidth of the second 640 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 640 MHz channel, and the bandwidth of the second 640 MHz channel, respectively.

For example, the two unoccupied values 6 and 7 of the first bandwidth indication information and the value 0 of the second bandwidth indication information indicate 640 MHz-1 and 640 MHz-2, respectively; and the two unoccupied values 6 of the first bandwidth indication information and the value 1 of the second bandwidth indication information indicate 240 MHz. As another example, the two related bandwidth values 4 and 5 of the first bandwidth indication information and the value 0 of the second bandwidth indication information indicate 640 MHz-1 and 640 MHz-2, respectively; and the two related bandwidth values 4 or 5 of the first bandwidth indication information and the value 1 of the second bandwidth indication information indicate 240 MHz.

In an implementation, a manner of the first information indicating the bandwidth of the 480 MHz channel and the bandwidth of the 640 MHz channel includes at least one of:
that four combined values constituted by two unoccupied values of the first bandwidth indication information and 1-bit values of the second bandwidth indication information indicate the bandwidth of the first 480 MHz channel, the bandwidth of the second 480 MHz channel, the bandwidth of the first 640 MHz channel and the bandwidth of the second 640 MHz channel, respectively; or
that four combined values constituted by two related bandwidth values of the first bandwidth indication information and a 2-bit value of the second bandwidth indication information indicate the bandwidth of the first 480 MHz channel, the bandwidth of the second 480 MHz channel, the bandwidth of the first 640 MHz channel and the bandwidth of the second 640 MHz channel, respectively.

For example, the two unoccupied values 6 and 7 of the first bandwidth indication information and the value 0 of the second bandwidth indication information indicate 640 MHz-1 and 640 MHz-2, respectively; and the two unoccupied values 6 and 7 of the first bandwidth indication information and the value 1 of the second bandwidth indication information indicate 480 MHz-1 and 480 MHz-2, respectively. As another example, the two related bandwidth values 4 and 5 of the first bandwidth indication information and the value 0 of the second bandwidth indication information indicate 640 MHz-1 and 640 MHz-2, respectively; and the two related bandwidth values 4 and 5 of the first bandwidth indication information and the value 1 of the second bandwidth indication information indicate 480 MHz-1 and 480 MHz-2, respectively.

In an implementation, a manner of the first information indicating the bandwidth of the 240 MHz channel, the bandwidth of the 480 MHz channel, and the bandwidth of the 640 MHz channel includes at least one of:
that five combined values constituted by two unoccupied values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively;
that five combined values constituted by two unoccupied values of the first bandwidth indication information, three related bandwidth values of the first bandwidth indication information, and a 1-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively; or
that five combined values constituted by three related bandwidth values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively.

For example, the two unoccupied values 6 and 7 of the first bandwidth indication information and the value 0 of the second bandwidth indication information indicate 640 MHz-1 and 640 MHz-2, respectively; the two unoccupied values 6 and 7 of the first bandwidth indication information and the value 1 of the second bandwidth indication information indicate 480 MHz-1 and 480 MHz-2, respectively; and the unoccupied value 6 of the first bandwidth indication information and the value 2 of the second bandwidth indication information indicate 240 MHz. As another example, the two related bandwidth values 4 and 5 of the first bandwidth indication information and the value 0 of the second bandwidth indication information indicate 640 MHz-1 and 640 MHz-2, respectively; the two related bandwidth values 4 and 5 of the first bandwidth indication information and the value 1 of the second bandwidth indication information indicate 480 MHz-1 and 480 MHz-2, respectively; and the two related bandwidth values 4 and 5 of the first bandwidth indication information and the value 2 of the second bandwidth indication information indicate 240 MHz. As another example, the two unoccupied values 6 and 7 of the first bandwidth indication information and the value 0 of the second bandwidth indication information indicate 640 MHz-1 and 640 MHz-2, respectively; and the three related bandwidth values 3, 4 and 5 of the first bandwidth indication information and the value 1 of the second bandwidth indication information indicate 240 MHz, 480 MHz-1 and 480 MHz-2, respectively.

In an implementation, the first information includes first punctured channel information and/or second punctured channel information.

In the embodiments of the present application, the punctured information may also be referred to as the punctured channel information. The punctured information and the bandwidth information may be carried in the same first information or in different first information.

In an implementation, the first punctured channel information and/or the second punctured channel information are used to indicate a puncturing granularity and a puncturing pattern of the channel bandwidth.

In the embodiments of the present application, a piece of punctured channel information may be used to indicate the punctured information of the transmission resource, or two pieces of punctured channel information may be combined to jointly indicate the punctured information of the transmission resource. For example, the PPDU includes the first punctured channel information and/or the second punctured channel information, and the first punctured channel information and/or the second punctured channel information may indicate the puncturing granularity and/or puncturing pattern of the transmission resource of the PPDU.

In an implementation, different puncturing patterns correspond to different multiple resource units (MRUs).

Referring to the above examples of puncturing processes of the 240 MHz channel, the 480 MHz channel and the 640 MHz channel, different puncturing patterns (or puncturing methods) may be used to obtain different numbers and types of MRUs.

In an implementation, a channel bandwidth of the transmission resource is 240 MHz, and a manner of the first information indicating the punctured information includes at least one of:
no sub-channels puncturing;
a 20 MHz sub-channel puncturing, where a value of the first punctured channel information indicates that an MRU corresponding to 20 MHz is punctured in a frequency order in the bandwidth of the 240 MHz channel; or
a 40 MHz sub-channel puncturing, where a value of the first punctured channel information indicates that a corresponding MRU is punctured in a frequency order in the bandwidth of the 240 MHz channel.

In the embodiments of the present application, the frequency order may be an order from high to low in frequency, or an order from low to high in frequency.

In an implementation, the 240 MHz channel may be punctured to obtain a plurality of MRUs. For example, in the bandwidth of the 240 MHz channel, the first to twelfth 20 MHz sub-channels are punctured in the frequency order to obtain 12 types of MRUs, and the MRU includes two RUs of 996 tones, a RU of 484 tones and a RU of 242 tones. The 12 types of MRUs require 12 values for indication. As another example, in the bandwidth of the 240 MHz channel, the first to sixth 40 MHz sub-channels are punctured in the frequency order to obtain 6 types of MRUs, and the MRU includes two RUs of 996 tones and a RU of 484 tones. The 6 types of MRUs require 6 values for indication.

In an implementation, a channel bandwidth of the transmission resource is 480 MHz, and a manner of the first information indicating the punctured information includes at least one of:
no sub-channels puncturing;
a 40 MHz sub-channel puncturing, where a value of the first punctured channel information and a value of the second punctured channel information jointly indicate that an MRU corresponding to a 40 MHz sub-channel is punctured in a frequency order in the bandwidth of the 480 MHz channel;
an 80 MHz sub-channel puncturing, where a value of the first punctured channel information and a value of the second punctured channel information jointly indicate that an MRU corresponding to an 80 MHz sub-channel is punctured in a frequency order in the bandwidth of the 480 MHz channel; or
concurrent 80 MHz sub-channel and 40 MHz sub-channel puncturing, where a value of the first punctured channel information and a value of the second punctured channel information jointly indicate that MRUs corresponding to an 80 MHz sub-channel and a 40 MHz sub-channel are punctured in a frequency order in the bandwidth of the 480 MHz channel.

In an implementation, the value of the first punctured channel information and the value of the second punctured channel information jointly indicating that MRUs corresponding to an 80 MHz sub-channel and a 40 MHz sub-channel are punctured in a frequency order in the bandwidth of the 480 MHz channel, includes:
that the value of the first punctured channel information and the value of the second punctured channel information jointly indicate that an MRU corresponding to an 80 MHz sub-channel is punctured arbitrarily in the bandwidth of the 480 MHz channel; and
that the value of the first punctured channel information and the value of the second punctured channel information jointly indicate that an MRU corresponding to a first 80 MHz sub-channel or a last 80 MHz sub-channel is punctured in the bandwidth of the 480 MHz channel, and then an MRU corresponding to any 40 MHz sub-channel is punctured in the remaining bandwidth.

In an implementation, the 480 MHz channel may be punctured to obtain a plurality of MRUs. For example, in the bandwidth of the 480 MHz channel, the first to twelfth 40 MHz sub-channels are punctured in the frequency order to obtain 12 types of MRUs, and the MRU includes five RUs of 996 tones and a RU of 484 tones. The 12 types of MRUs require 12 values for indication. As another example, in the bandwidth of the 480 MHz channel, the first to sixth 80 MHz sub-channels are punctured in the frequency order to obtain 6 types of MRUs, and the MRU includes five RUs of 996 tones. The 6 types of MRUs require 6 values for indication. As another example, any 80 MHz sub-channel is punctured in the bandwidth of the 480 MHz channel and then any 40 MHz sub-channel is punctured in the remaining bandwidth, so as to obtain 60 types of MRUs that require 60 values for indication. Alternatively, the first 80 MHz sub-channel or the last 80 MHz sub-channel is punctured in the bandwidth of the 480 MHz channel and then any 40 MHz sub-channel is punctured in the remaining bandwidth, so as to obtain 20 types of MRUs that require 20 values for indication. In the examples, the MRUs include 4 RUs of 996 tones and 1 RU of 484 tones.

In an implementation, a channel bandwidth of the transmission resource is 640 MHz, and a manner of the first information indicating the punctured information includes at least one of:
no sub-channels puncturing;
an 80 MHz sub-channel puncturing, where a value of the first punctured channel information and a value of the second punctured channel information jointly indicate that an MRU corresponding to an 80 MHz sub-channel is punctured in a frequency order in the bandwidth of the 640 MHz channel;
a 160 MHz sub-channel puncturing, where a value of the first punctured channel information and a value of the second punctured channel information jointly indicate that an MRU corresponding to a 160 MHz sub-channel is punctured in a frequency order in the bandwidth of the 640 MHz channel; or
concurrent 160 MHz sub-channel and 80 MHz sub-channel puncturing, where a value of the first punctured channel information and a value of the second punctured channel information jointly indicate that an MRU corresponding to a 160 MHz sub-channel and an 80 MHz sub-channel is punctured in the bandwidth of the 640 MHz channel.

In an implementation, the value of the first punctured channel information and the value of the second punctured channel information jointly indicating that an MRU corresponding to a 160 MHz sub-channel and an 80 MHz sub-channel is punctured in the bandwidth of the 640 MHz channel, includes:
that the value of the first punctured channel information and the value of the second punctured channel information jointly indicate that an MRU corresponding to a 160 MHz sub-channel and an 80 MHz sub-channel is punctured arbitrarily in the bandwidth of the 640 MHz channel; and
that the value of the first punctured channel information and the value of the second punctured channel information jointly indicate that an MRU corresponding to a first 160 MHz sub-channel or a last 160 MHz sub-channel is punctured in the bandwidth of the 640 MHz channel, and then an MRU corresponding to any 80 MHz sub-channel is punctured in the remaining bandwidth.

In an implementation, the 640 MHz channel may be punctured to obtain a plurality of MRUs. For example, in the bandwidth of the 640 MHz channel, the first to eighth 80 MHz sub-channels are punctured in the frequency order to obtain 8 types of MRUs, and the MRU includes seven RUs of 996 sub-carriers. The above 8 types of MRUs require 8 values for indication.

As another example, in the bandwidth of the 640 MHz channel, any two 80 MHz sub-channels are punctured to obtain 28 types of MRUs. Alternatively, in the bandwidth of the 640 MHz channel, starting from a first 160 MHz sub-channel, 160 MHz sub-channels are punctured in sequence to obtain 28 types of MRUs; where the MRU includes 6 RUs of 996 sub-carriers. The above 28 types of MRUs require 28 values for indication.

As another example, in the bandwidth of the 640 MHz channel, any three 80 MHz sub-channels are punctured to obtain 56 types of MRUs that require 56 values for indication. Alternatively, in the bandwidth of the 640 MHz channel, any 160 MHz sub-channel and any 80 MHz sub-channel are punctured to obtain 24 types of MRUs that require 24 values to indicate. Alternatively, in the bandwidth of the 640 MHz channel, a first 160 MHz sub-channel or a last 160 MHz sub-channel is punctured in the bandwidth of the 640 MHz channel, and then any 80 MHz sub-channel is punctured in the remaining bandwidth to obtain 12 types of MRUs that require 12 values for indication. The MRU in the examples includes 5 RUs of 996 tones.

In the above puncturing methods of the bandwidth of the 480 MHz channel and the bandwidth of the 640 MHz channel, some methods obtain too many MRU types, for example, more than 30 types. If the number of indication bits of the punctured channel information needs to be controlled, a puncturing method that obtains a moderate or small number of MRU types after being punctured may be preferred.

In an implementation, the first bandwidth indication information is a bandwidth subfield in the U-SIG field.

In an implementation, the second bandwidth indication information is a bandwidth extension subfield in the U-SIG field.

In an implementation, the first bandwidth indication information is a punctured channel information subfield in the U-SIG field.

In an implementation, the second punctured channel information is a punctured channel information extension subfield in the U-SIG field.

In an implementation, the U-SIG field is in the UHR PPDU.

In an implementation, the UHR PPDU is a UHR MU PPDU and/or a UHR TB PPDU.

In an implementation, the U-SIG field includes information for indicating a UHR PHY version.

In an implementation, a PHY version identifier subfield in the U-SIG field is used to indicate information about the UHR PHY version.

In an implementation, a data packet transmitted by the transmission resource is a non-OFDMA UHR PPDU.

FIG. 5 is a schematic block diagram of a station 500 according to the embodiments of the present application. The station 500 may include:
a processing unit 510 configured to transmit and/or receive first information, where the first information is used to indicate bandwidth information and/or punctured information of a transmission resource.

In an implementation, the first information includes first bandwidth indication information and/or second bandwidth indication information.

In an implementation, the first bandwidth indication information and/or the second bandwidth indication information are used to indicate the bandwidth information of the transmission resource, and the transmission resource is used to transmit the data packet.

In an implementation, a manner of the first information indicating newly added bandwidth information includes at least one of:
that a value of the first bandwidth indication information indicates the newly added bandwidth information;
that a value of the second bandwidth indication information indicates the newly added bandwidth information; or
that combined value(s) constituted by the value of the first bandwidth indication information and the value of the second bandwidth indication information indicate the newly added bandwidth information; where the number of the combined values is the same as the number of the newly added bandwidths.

In an implementation, the value of the first bandwidth indication information includes an unoccupied value and/or an occupied related bandwidth value.

In an implementation, a manner of the first information indicating a type of newly added bandwidth information includes at least one of:
that an unoccupied value of the first bandwidth indication information indicates a first bandwidth;
that a value of the second bandwidth indication information indicates the first bandwidth;
that a combined value constituted by the unoccupied value of the first bandwidth indication information and the value of the second bandwidth indication information indicates the first bandwidth; or
that a combined value constituted by the related bandwidth value of the first bandwidth indication information and the value of the second bandwidth indication information indicates the first bandwidth.

In an implementation, a manner of the first information indicating two types of newly added bandwidth information includes at least one of:
that unoccupied values of the first bandwidth indication information indicate a first bandwidth and a second bandwidth, respectively;
that values of the second bandwidth indication information indicate the first bandwidth and the second bandwidth, respectively;
that two combined values constituted by the unoccupied values of the first bandwidth indication information and a value of the second bandwidth indication information indicate the first bandwidth and the second bandwidth, respectively; or
that two combined values constituted by related bandwidth values of the first bandwidth indication information and a value of the second bandwidth indication information indicate the first bandwidth and the second bandwidth, respectively.

In an implementation, a manner of the first information indicating three types of newly added bandwidth information includes at least one of:
that three combined values constituted by unoccupied values of the first bandwidth indication information and values of the second bandwidth indication information indicate a first bandwidth, a second bandwidth and a third bandwidth, respectively; or
that three combined values constituted by related bandwidth values of the first bandwidth indication information and a value of the second bandwidth indication information indicate the first bandwidth, the second bandwidth and the third bandwidth, respectively.

In an implementation, a manner of the first information indicating four types of newly added bandwidth information includes at least one of:
that four combined values constituted by unoccupied values of the first bandwidth indication information and an at least 1-bit value of the second bandwidth indication information indicate a first bandwidth, a second bandwidth, a third bandwidth and a fourth bandwidth, respectively; or
that four combined values constituted by related bandwidth values of the first bandwidth indication information and an at least 2-bit value of the second bandwidth indication information indicate the first bandwidth, the second bandwidth, the third bandwidth and the fourth bandwidth, respectively.

In an implementation, a manner of the first information indicating five types of newly added bandwidth information includes at least one of:
that five combined values constituted by unoccupied values of the first bandwidth indication information, related bandwidth values of the first bandwidth indication information, and an at least 1-bit value of the second bandwidth indication information indicate a first bandwidth, a second bandwidth, a third bandwidth, a fourth bandwidth and a fifth bandwidth, respectively;
that five combined values constituted by unoccupied values of the first bandwidth indication information and an at least 2-bit value of the second bandwidth indication information indicate the first bandwidth, the second bandwidth, the third bandwidth, the fourth bandwidth, and the fifth bandwidth respectively; or
that five combined values constituted by related bandwidth values of the first bandwidth indication information and an at least 2-bit value of the second bandwidth indication information indicate the first bandwidth, the second bandwidth, the third bandwidth, the fourth bandwidth and the fifth bandwidth respectively.

In an implementation, the bandwidth information of the transmission resource includes at least one of the following newly added bandwidth information:
a bandwidth of a 240 MHz channel, a bandwidth of a 480 MHz channel, or a bandwidth of a 640 MHz channel.

In an implementation, the bandwidth of the 480 MHz channel includes a bandwidth of a first 480 MHz channel and a bandwidth of a second 480 MHz channel.

In an implementation, the bandwidth of the 640 MHz channel includes a bandwidth of a first 640 MHz channel and a bandwidth of a second 640 MHz channel.

In an implementation, a manner of the first information indicating the bandwidth of the 240 MHz channel includes at least one of:
that an unoccupied value of the first bandwidth indication information indicates the bandwidth of the 240 MHz channel;
that a value of the second bandwidth indication information indicates the bandwidth of the 240 MHz channel;
that the unoccupied value of the first bandwidth indication information and the value of the second bandwidth indication information jointly indicate the bandwidth of the 240 MHz channel; or
that a related bandwidth value of the first bandwidth indication information and the value of the second bandwidth indication information jointly indicate the bandwidth of the 240 MHz channel.

In an implementation, a manner of the first information indicating the bandwidth of the 480 MHz channel includes at least one of:
that two unoccupied values of the first bandwidth indication information indicate the bandwidth of the first 480 MHz channel and the bandwidth of the second 480 MHz channel, respectively;
that the values of the second bandwidth indication information indicate the bandwidth of the first 480 MHz channel and the bandwidth of the second 480 MHz channel, respectively;
that two combined values constituted by the two unoccupied values of the first bandwidth indication information and the value of the second bandwidth indication information indicate the bandwidth of the first 480 MHz channel and the bandwidth of the second 480 MHz channel, respectively; or
that two combined values constituted by two related bandwidth values of the first bandwidth indication information and the value of the second bandwidth indication information indicate the bandwidth of the first 480 MHz channel and the bandwidth of the second 480 MHz channel, respectively.

In an implementation, a manner of the first information indicating the bandwidth of the 640 MHz channel includes at least one of:
that two unoccupied values of the first bandwidth indication information indicate the bandwidth of the first 640 MHz channel and the bandwidth of the second 640 MHz channel, respectively;
that values of the second bandwidth indication information indicate the bandwidth of the first 640 MHz channel and the bandwidth of the second 640 MHz channel, respectively;
that two combined values constituted by the two unoccupied values of the first bandwidth indication information and the value of the second bandwidth indication information indicate the bandwidth of the first 640 MHz channel and the bandwidth of the second 640 MHz channel, respectively; or
that two combined values constituted by two related bandwidth values of the first bandwidth indication information and the value of the second bandwidth indication information indicate the bandwidth of the first 640 MHz channel and the bandwidth of the second 640 MHz channel, respectively.

In an implementation, a manner of the first information indicating the bandwidth of the 240 MHz channel and the bandwidth of the 480 MHz channel includes at least one of:
that three combined values constituted by two unoccupied values of the first bandwidth indication information and a 1-bit value of the second bandwidth indication information indicate the bandwidth of the 240 MHz channel, the bandwidth of the first 480 MHz channel, and the bandwidth of the second 480 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 480 MHz channel, and the bandwidth of the second 480 MHz channel, respectively.

In an implementation, a manner of the first information indicating the bandwidth of the 240 MHz channel and the bandwidth of the 640 MHz channel includes at least one of:
that three combined values constituted by two unoccupied values of the first bandwidth indication information and a 1-bit value of the second bandwidth indication information indicate the bandwidth of the 240 MHz channel, the bandwidth of the first 640 MHz channel, and the bandwidth of the second 640 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 640 MHz channel, and the bandwidth of the second 640 MHz channel, respectively.

In an implementation, a manner of the first information indicating the bandwidth of the 480 MHz channel and the bandwidth of the 640 MHz channel includes at least one of:
that four combined values constituted by two unoccupied values of the first bandwidth indication information and a 1-bit value of the second bandwidth indication information indicate the bandwidth of the first 480 MHz channel, the bandwidth of the second 480 MHz channel, the bandwidth of the first 640 MHz channel and the bandwidth of the second 640 MHz channel, respectively; or
that four combined values constituted by two related bandwidth values of the first bandwidth indication information and a 2-bit value of the second bandwidth indication information indicate the bandwidth of the first 480 MHz channel, the bandwidth of the second 480 MHz channel, the bandwidth of the first 640 MHz channel and the bandwidth of the second 640 MHz channel, respectively.

In an implementation, a manner of the first information indicating the bandwidth of the 240 MHz channel, the bandwidth of the 480 MHz channel, and the bandwidth of the 640 MHz channel includes at least one of:
that five combined values constituted by two unoccupied values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively;
that five combined values constituted by two unoccupied values of the first bandwidth indication information, three related bandwidth values of the first bandwidth indication information, and a 1-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively; or
that five combined values constituted by three related bandwidth values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively.

In an implementation, the first information includes first punctured channel information and/or second punctured channel information.

In an implementation, the first punctured channel information and/or the second punctured channel information are used to indicate a puncturing granularity and a puncturing pattern of the channel bandwidth.

In an implementation, different puncturing patterns correspond to different MRUs.

In an implementation, a channel bandwidth of the transmission resource is 240 MHz, and a manner of the first information indicating the punctured information includes at least one of:
no sub-channels puncturing;
a 20 MHz sub-channel puncturing, where a value of the first punctured channel information indicates that an MRU corresponding to 20 MHz is punctured in a frequency order in the bandwidth of the 240 MHz channel; or
a 40 MHz sub-channel puncturing, where a value of the first punctured channel information indicates that a corresponding MRU is punctured in a frequency order in the bandwidth of the 240 MHz channel.

In an implementation, a channel bandwidth of the transmission resource is 480 MHz, and a manner of the first information indicating the punctured information includes at least one of:
no sub-channels puncturing;
a 40 MHz sub-channel puncturing, where a value of the first punctured channel information and a value of the second punctured channel information jointly indicate that an MRU corresponding to a 40 MHz sub-channel is punctured in a frequency order in the bandwidth of the 480 MHz channel;
an 80 MHz sub-channel puncturing, where a value of the first punctured channel information and a value of the second punctured channel information jointly indicate that an MRU corresponding to an 80 MHz sub-channel is punctured in a frequency order in the bandwidth of the 480 MHz channel; or
concurrent 80 MHz sub-channel and 40 MHz sub-channel puncturing, where a value of the first punctured channel information and a value of the second punctured channel information jointly indicate that an MRU corresponding to an 80 MHz sub-channel and a 40 MHz sub-channel is punctured in a frequency order in the bandwidth of the 480 MHz channel.

In an implementation, the value of the first punctured channel information and the value of the second punctured channel information jointly indicating that an MRU corresponding to an 80 MHz sub-channel and a 40 MHz sub-channel is punctured in a frequency order in the bandwidth of the 480 MHz channel, includes:
that the value of the first punctured channel information and the value of the second punctured channel information jointly indicate that an MRU corresponding to an 80 MHz sub-channel is punctured arbitrarily in the bandwidth of the 480 MHz channel; and
that the value of the first punctured channel information and the value of the second punctured channel information jointly indicate that an MRU corresponding to a first 80 MHz sub-channel or a last 80 MHz sub-channel is punctured in the bandwidth of the 480 MHz channel, and then an MRU corresponding to any 40 MHz sub-channel is punctured in the remaining bandwidth.

In an implementation, a channel bandwidth of the transmission resource is 640 MHz, and a manner of the first information indicating the punctured information includes at least one of:
no sub-channels puncturing;
an 80 MHz sub-channel puncturing, where a value of the first punctured channel information and a value of the second punctured channel information jointly indicate that an MRU corresponding to an 80 MHz sub-channel is punctured in a frequency order in the bandwidth of the 640 MHz channel;
a 160 MHz sub-channel puncturing, where a value of the first punctured channel information and a value of the second punctured channel information jointly indicate that an MRU corresponding to a 160 MHz sub-channel is punctured in a frequency order in the bandwidth of the 640 MHz channel; or
concurrent 160 MHz sub-channel and 80 MHz sub-channel puncturing, where a value of the first punctured channel information and a value of the second punctured channel information jointly indicate that an MRU corresponding to a 160 MHz sub-channel and an 80 MHz sub-channel is punctured in the bandwidth of the 640 MHz channel.

In an implementation, the value of the first punctured channel information and the value of the second punctured channel information jointly indicating that an MRU corresponding to a 160 MHz sub-channel and an 80 MHz sub-channel is punctured in the bandwidth of the 640 MHz channel, includes:
that the value of the first punctured channel information and the value of the second punctured channel information jointly indicate that an MRU corresponding to a 160 MHz sub-channel and an 80 MHz sub-channel is punctured arbitrarily in the bandwidth of the 640 MHz channel; and
that the value of the first punctured channel information and the value of the second punctured channel information jointly indicate that an MRU corresponding to a first 160 MHz sub-channel or a last 160 MHz sub-channel is punctured in the bandwidth of the 640 MHz channel, and then an MRU corresponding to any 80 MHz sub-channel is punctured in the remaining bandwidth.

In an implementation, the first bandwidth indication information is a bandwidth subfield in the U-SIG field; and
the second bandwidth indication information is a bandwidth extension subfield in the U-SIG field.

In an implementation, the first bandwidth indication information is a punctured channel information subfield in the U-SIG field; and
the second punctured channel information is a punctured channel information extension subfield in the U-SIG field.

In an implementation, the U-SIG field is in the UHR PPDU.

In an implementation, the UHR PPDU is a UHR MU PPDU and/or a UHR TB PPDU.

In an implementation, the U-SIG field includes information for indicating a UHR PHY version.

In an implementation, a PHY version identifier subfield in the U-SIG field is used to indicate information about the UHR PHY version.

The station 500 in the embodiments of the present application can implement the corresponding functions of the station in the aforementioned method embodiments. The processes, functions, implementation methods and beneficial effects corresponding to various modules (sub-modules, units or components) in the station 500 may refer to the corresponding description in the above method embodiments, and details are not repeated here. It will be noted that the functions described in the various modules (sub-modules, units or components) in the station 500 in the embodiments of the present application may be implemented by different modules (sub-modules, units or components) or by the same module (sub-module, unit or component).

The embodiments of the present application are applicable to a new generation Wi-Fi communication, such as ultra-high reliability (UHR), based on a new channel bandwidth, such as 240 MHz, 480 MHz (including 480 MHz-1 and 480 MHz-2) and 640 MHz (including 640 MHz-1 and 640 MHz-2), a new UHR PPDU may be provided. A signaling indication in the U-SIG of the PPDU is, for example, as follows:
(1) A UHR PPDU may include a UHR MU PPDU and a UHR TB PPDU.
(2) A U-SIG field in the UHR PPDU may include: a PHY version identifier subfield indicating the PHY type; a Bandwidth subfield indicating the bandwidth, a Bandwidth and Bandwidth Extension subfield jointly indicating the bandwidth; a punctured channel information subfield indicating the non-orthogonal frequency division multiple access (non-OFDMA) puncturing pattern, and a punctured channel information and punctured channel information extension subfield jointly indicating the non-OFDMA puncturing pattern.

### 1. UHR PPDU

The UHR PPDU has two forms: UHR MU PPDU and UHR TB PPDU.

### (1) UHR MU PPDU

A format of the UHR MU PPDU is shown in FIG. 6 and is used to transmit to one or more users. The L-STF field is mainly used for signal detection, automatic gain control, time synchronization and coarse frequency offset estimation. The L-LTF field is mainly used for channel estimation and further frequency offset estimation. The L-SIG field is used to transmit rate and length information. The RL-SIG is a repetition of the L-SIG. The U-SIG and UHR-SIG fields are used to carry information for decoding the PPDU. The UHR-STF field is used to improve automatic gain control estimation in multiple-input multiple-output (MIMO) transmission. The UHR-LTF is used for MIMO channel estimation from constellation mapping output to the receiving link. The Data field transmits information. The PE field is an extension of the packet. In the UHR MU PPDU, the L-STF, the L-LTF, the L-SIG, the U-SIG and the UHR-SIG are called pre-UHR modulation fields; and the UHR-STF, the UHR-LTF, the Data and the PE are called UHR modulation fields.

### (2) UHR TB PPDU

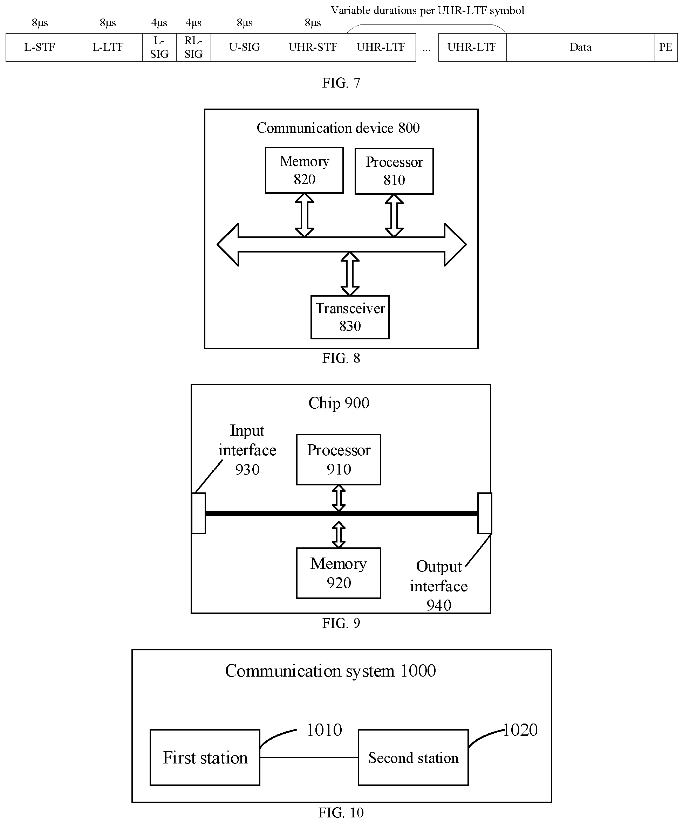

A format of the UHR TB PPDU is shown in FIG. 7 and is used to transmit a response trigger frame from an AP. In the UHR TB PPDU, the L-STF, the L-LTF, the L-SIG and the U-SIG are called pre-UHR modulation fields; and the UHR-STF, the UHR-LTF, the Data and the PE are called UHR modulation fields. A duration of the UHR-STF field in the UHR TB PPDU is twice a duration of the UHR-STF field in the UHR MU PPDU.

### 2. Design of the U-SIG field in UHR PPDU

The U-SIG field carries information required for decoding the UHR PPDU. An integer field of the U-SIG field is transmitted in an unsigned binary format, and the least significant bit (LSB) is first, where the LSB is located in the lowest numbered bit position.

The embodiments of the present application provide a Bandwidth indication and a channel puncturing pattern indication of non-OFDMA transmission.

### (1) Bandwidth indication

Newly added bandwidth of UHR PPDU is 240 MHz, 480 MHz or 640 MHz, and channelization thereof is as follows.

The 240 MHz channel consists of three consecutive 80 MHz IEEE channels in the 5 GHz band.

The 480 MHz channel consists of any three adjacent 160 MHz IEEE channels in the 6 GHz band and has two types: 480 MHz-1 and 480 MHz-2. A channel center frequency index of 480 MHz-1 is 47, 143; and a channel center frequency index of 480 MHz-2 is 79, 175.

The 640 MHz channel consists of any four adjacent 160 MHz IEEE channels in the 6 GHz band and has two types: 640 MHz-1 and 640 MHz-2. A channel center frequency index of 640 MHz-1 is 63; and a channel center frequency index of 640 MHz-2 is 159.

The embodiments of the present application may indicate one of 240 MHz, 480 MHz or 640 MHz, or indicate two of 240 MHz, 480 MHz or 640 MHz, or indicate all of 240 MHz, 480 MHz or 640 MHz.

If a value of the Bandwidth subfield in the U-SIG field is a reserved value, the embodiments of the present application may define one or more reserved values as values of an unused Bandwidth subfield.

### (a) Indicating one of 240 MHz, 480 MHz or 640 MHz bandwidths

Option 1: a value of an unused Bandwidth subfield is used for indication.

The Bandwidth subfield in the U-SIG field occupies 3 bits (values ranging from 0 to 7), where values 0 to 5 indicate 20 MHz, 40 MHz, 80 MHz, 160 MHz, 320 MHz-1 and 320 MHz-2 bandwidths, respectively, and values 6 to 7 are reserved.

In the embodiments of the present application, the value 6 or 7 of the unused Bandwidth subfield may be used to indicate one of the bandwidths of 240 MHz, 480 MHz, or 640 MHz. The specific content of the U-SIG field is shown in Table 2. Table 2 The U-SIG field of the UHR MU PPDU indicates one of 240 MHz 480 MHz or 640 MHz

| Two parts of U-SIG | Bit | Field | Number of bits | Description |
|---|---|---|---|---|
| U-SIG-1 | B0 to B2 | PHY Version Identifier | 3 | Differentiate between different PHY clauses. A value 1 indicates UHR PHY. |
| | B3 to B5 | Bandwidth | 3 | Indicate PPDU bandwidth. |
| | | | | Values 0 to 5 indicate 20 MHz /40 MHz/80 MHz/160 MHz/320 MHz-1/320 MHz-2 (Values 0 to 5 indicate PPDU 20 MHz/40 MHz/80 MHz/160 MHz/320 MHz-1/320 MHz-2). |
| | | | | Values 6 to 7 are defined as follows, referring to Table 2-1, Table 2-2 or Table 2-3 |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B24 | Disregard | 5 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

### Example:

Indicating 240 MHz: a value 6 of the Bandwidth subfield indicates the 240 MHz bandwidth. As shown in Table 2-1 below.

**Table 2-1**

| Bandwidth field | Bandwidth |
|---|---|
| 6 | 240 MHz |
| 7 | Reserved |

Indicating 480 MHz: a value 6 of the Bandwidth subfield indicates the 480 MHz-1 bandwidth, and a value 7 of the Bandwidth subfield indicates the 480 MHz-2 bandwidth. As shown in Table 2-2 below.

**Table 2-2**

| Bandwidth field | Bandwidth |
|---|---|
| 6 | 480 MHz-1 |
| 7 | 480 MHz-2 |

Indicating 640 MHz: a value 6 of the Bandwidth subfield indicates the 640 MHz-1 bandwidth, and a value 7 of the Bandwidth subfield indicates the 640 MHz-2 bandwidth. As shown in Table 2-3 below.

**Table 2-3**

| Bandwidth field | Bandwidth |
|---|---|
| 6 | 640 MHz-1 |
| 7 | 640 MHz-2 |

Option 2: a combination of the value 3 or 4 to 5 of the Bandwidth subfield and a 1-bit value of the Bandwidth Extension subfield is used for indication.

The Bandwidth subfield in the U-SIG field occupies 3 bits (values ranging from 0 to 7), where values 0 to 5 indicate 20 MHz/40 MHz/80 MHz/160 MHz/320 MHz-1/320 MHz-2 bandwidths, respectively, and values 6 to 7 are reserved.

In order to allow a third-party legacy STA to obtain PPDU bandwidth information and properly set NAV, for example, in a case where an operating frequency band is 5 GHz and the UHR PPDU bandwidth is 240 MHz, the legacy STA cannot recognize the 240 MHz bandwidth since the maximum bandwidth supported is 160 MHz. In this case, if the legacy STA can recognize the 240 MHz PPDU bandwidth as a 160 MHz PPDU bandwidth, it may help the legacy STA to set the NAV appropriately. To achieve this goal, in a case where the UHR PPDU bandwidth is 240 MHz, the Bandwidth subfield in the U-SIG may be set to 3 with reference to the value corresponding to 160 MHz.

As another example, in a case where an operating frequency band is 6 GHz and the UHR PPDU bandwidth is 480 MHz, the legacy STA cannot recognize the 480 MHz bandwidth since the maximum bandwidth supported is 320 MHz. In this case, if the legacy STA can recognize the 480 MHz PPDU bandwidth as a 320 MHz PPDU bandwidth, it may help the legacy STA to set the NAV appropriately. To achieve this goal, in a case where the UHR PPDU bandwidth is 480 MHz, the Bandwidth subfield in the U-SIG may be set to 4 or 5 with reference to the value corresponding to 160 MHz.

Based on this, the embodiments of the present application propose to use a combination of at least one of values 3, 4 or 5 of the Bandwidth subfield and a 1-bit value of the Bandwidth Extension subfield to indicate one of the 240 MHz, 480 MHz or 640 MHz bandwidths.

For example, a value 3 of the Bandwidth subfield and a value 0 of the Bandwidth Extension subfield indicate a 240 MHz bandwidth; and a value 3 of the Bandwidth subfield and a value 1 of the Bandwidth Extension subfield indicate a 160 MHz bandwidth.

As another example, values 4 to 5 of the Bandwidth subfield and a value 0 of the Bandwidth Extension subfield indicate 480 MHz-1 and 480 MHz-2 bandwidths; and values 4 to 5 of the Bandwidth subfield and a value 1 of the Bandwidth Extension subfield indicate 320 MHz-1 and 320 MHz-2 bandwidths.

As another example, values 4 to 5 of the Bandwidth subfield and a value 0 of the Bandwidth Extension subfield indicate 640 MHz-1 and 640 MHz-2 bandwidths; and values 4 to 5 of the Bandwidth subfield and a value 1 of the Bandwidth Extension subfield indicate 320 MHz-1 and 320 MHz-2 bandwidths.

The specific content of the U-SIG field is shown in Table 3.

**Table 3 The U-SIG field of the UHR MU PPDU indicates one of 240 MHz, 480 MHz, or 640 MHz**

| Two parts of U-SIG | Bit | Field | Number of bits | Description |
|---|---|---|---|---|
| U-SIG-1 | B0 to B2 | PHY Version Identifier | 3 | Differentiate between different PHY clauses. A value 1 indicates UHR PHY. |
| | B3 to B5 | Bandwidth | 3 | Combined with the Bandwidth Extension subfield to indicate the PPDU bandwidth. |
| | | | | Values 0 to 7 are defined as follows, referring to Table 3-1, Table 3-2 or Table 3-3. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 | Bandwidth Extension | 1 | Combined with the Bandwidth subfield to indicate the PPDU bandwidth. |
| | | | | Values 0 to 1 are defined as follows, referring to Table 3-1, Table 3-2 or Table 3-3. |
| | B21 to B24 | Disregard | 4 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

### Example:

Refer to Table 3-1, indicating 240 MHz: in a case where a value of the Bandwidth subfield is 3 and a value of the Bandwidth Extension subfield is 0, a 240 MHz bandwidth - is indicated.

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0 | Reserved |
| | 1 | Reserved |
| | 2 | Reserved |
| | **3** | **240 MHz** |
| | 4 | Reserved |
| | 5 | Reserved |
| | 6~7 | Reserved |

Refer to Table 3-2, indicating 480 MHz: in a case where a value of the Bandwidth subfield is 4 and a value of the Bandwidth Extension subfield is 0, a 480 MHz-1 bandwidth is indicated.

In a case where a value of the Bandwidth subfield is 5 and a value of the Bandwidth Extension subfield is 0, a 480 MHz-2 bandwidth is indicated. Table 3-2

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0 | Reserved |
| | 1 | Reserved |
| | 2 | Reserved |
| | 3 | Reserved |
| | **4** | **480 MHz-1** |
| | **5** | **480 MHz-2** |
| | 6~7 | Reserved |

Refer to Table 3-3, indicating 640 MHz: in a case where a value of the Bandwidth subfield is 4 and a value of the Bandwidth Extension subfield is 0, a 640 MHz-1 bandwidth is indicated.

In a case where a value of the Bandwidth subfield is 5 and a value of the Bandwidth Extension subfield is 0, a 640 MHz-2 bandwidth is indicated. Table 3-3

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0 | Reserved |
| | 1 | Reserved |
| | 2 | Reserved |
| | 3 | Reserved |
| | **4** | **640 MHz-1** |
| | **5** | **640 MHz-2** |
| | 6~7 | Reserved |

### (b) Indicating two of 240 MHz, 480 MHz or 640 MHz bandwidths

The embodiments of the present application propose that the Bandwidth subfield and the Bandwidth Extension subfield jointly indicate two of the 240/480/640 MHz bandwidths. The specific content of the U-SIG field is shown in Table 4.

**Table 4 The U-SIG field of the UHR MU PPDU indicates two of 240 MHz, 480 MHz or 640 MHz**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | | | | A value 1 indicates UHR PHY. |
| | B to B5 | Bandwidth | 3 | Indicate PPDU bandwidth. |
| | | | | Values 0 to 5 indicate 20 MHz/40 MHz/80 MHz/160 MHz/320 MHz-1/320 MHz-2. |
| | | | | Values 6 to 7 are defined as follows, referring to Table 4-1 to Table 4-6. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 or B20 to B21 | Bandwidth Extension | 1 or 2 | Values 0 to 1 or 0 to 3 are defined as follows, referring to Table 4-1 to Table 4-6. |
| | B21 to B24 or B22 to B24 | Disregard | 4or3 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

### Indicating 240 MHz, 480 MHz-1, 480 MHz-2

Option 1: a combination of a value of an unused Bandwidth subfield and a 1-bit value of a Bandwidth Extension subfield is used for indication, referring to Table 4-1.

**Table 4-1**

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | **6** | **240 MHz** |
| | **7** | **480 MHz-1** |
| 0 | 0~5 | Reserved |
| | **6** | **480 MHz-2** |
| | 7 | Reserved |

Option 2: a combination of values 3 to 5 of the Bandwidth subfield and a 1-bit value of the Bandwidth Extension subfield is used for indication, referring to Table 4-2.

In a case where the value of the Bandwidth subfield is 3 and the value of the Bandwidth Extension subfield is 0, a 240 MHz bandwidth is indicated.

In a case where the value of the Bandwidth subfield is 4 and the value of the Bandwidth Extension subfield is 0, a 480 MHz-1 bandwidth is indicated.

In a case where the value of the Bandwidth subfield is 5 and the value of the Bandwidth Extension subfield is 0, a 480 MHz-2 bandwidth is indicated. Table 4-2

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0~2 | Reserved |
| | 3 | 240 MHz |
| | **4** | **480 MHz-1** |
| | **5** | **480 MHz-2** |
| | 6~7 | Reserved |

### Indicating 240 MHz, 640 MHz-1, 640 MHz-2

Option 1: a combination of a value of an unused Bandwidth subfield and a 1-bit value of a Bandwidth Extension subfield is used for indication, referring to Table 4-3.

**Table 4-3**

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | **6** | **240 MHz** |
| | **7** | **640 MHz-1** |
| 0 | 0~5 | Reserved |
| | **6** | **640 MHz-2** |
| | 7 | Reserved |

Option 2: a combination of values 3 to 5 of the Bandwidth subfield and a 1-bit value of the Bandwidth Extension subfield is used for indication, referring to Table 4-4.

In a case where the value of the Bandwidth subfield is 3 and the value of the Bandwidth Extension subfield is 0, a 240 MHz bandwidth is indicated.

In a case where the value of the Bandwidth subfield is 4 and the value of the Bandwidth Extension subfield is 0, a 640 MHz-1 bandwidth is indicated.

In a case where the value of the Bandwidth subfield is 5 and the value of the Bandwidth Extension subfield is 0, a 640 MHz-2 bandwidth is indicated.

**Table 4-4**

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0~2 | Reserved |
| | **3** | **240 MHz** |
| | **4** | **640 MHz-1** |
| | **5** | **640 MHz-2** |
| | 6~7 | Reserved |

### Indicating 480 MHz-1, 480 MHz-2, 640 MHz-1, 640 MHz-2

Option 1: a combination of a value of an unused Bandwidth subfield and a 1-bit value of a Bandwidth Extension subfield is used for indication, referring to Table 4-5.

**Table 4-5**

| Bandwidth Extension field | Bandwidth field | Bandwidth |
|---|---|---|
| 1 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | **6** | **480 MHz-1** |
| | **7** | **480 MHz-2** |
| 0 | 0~5 | Reserved |
| | **6** | **640 MHz-1** |
| | **7** | **640 MHz-2** |

Option 2: a combination of values 4 to 5 of the Bandwidth subfield and a 2-bit value of the Bandwidth Extension subfield is used for indication, referring to Table 4-6.

In a case where the value of the Bandwidth subfield is 4 and the value of the Bandwidth Extension subfield is 0, a 480 MHz-1 bandwidth is indicated.

In a case where the value of the Bandwidth subfield is 5 and the value of the Bandwidth Extension subfield is 0, a 480 MHz-2 bandwidth is indicated.

In a case where the value of the Bandwidth subfield is 4 and the value of the Bandwidth Extension subfield is 1, a 640 MHz-1 bandwidth is indicated.

In a case where the value of the Bandwidth subfield is 5 and the value of the Bandwidth Extension subfield is 1, a 640 MHz-2 bandwidth is indicated.

**Table 4-6**

| Bandwidth Extension field | Bandwidth field | Bandwidth |
|---|---|---|
| 3 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0~3 | Reserved |
| | **4** | **480 MHz-1** |
| | **5** | **480 MHz-2** |
| | 6~7 | Reserved |
| 1 | 0~3 | Reserved |
| | **4** | **640 MHz-1** |
| | **5** | **640 MHz-2** |
| | 6~7 | Reserved |
| 2 | 0~7 | Reserved |

### (c) Indicating 240 MHz, 480 MHz and 640 MHz bandwidths

The embodiments of the present application propose that the Bandwidth subfield and the 2-bit Bandwidth Extension subfield jointly indicate 240 MHz, 480 MHz and 640 MHz bandwidths. The specific content of the U-SIG field is shown in Table 5.

**Table 5 The U-SIG field of UHR MU PPDU indicates 240 MHz, 480 MHz and 640 MHz bandwidths**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | | | | A value 1 indicates UHR PHY. |
| | B3 to B5 | Bandwidth | 3 | Indicate PPDU bandwidth. |
| | | | | Values 0 to 5 indicate 20 MHz/40 MHz/80 MHz/160 MHz/320 MHz-1/320 MHz-2. |
| | | | | Values 6 to 7 are defined as follows, referring to Table 5-1, Table 5-2 or Table 5-3. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B21 | Bandwidth Extension | 2 | Values 0 to 3 are defined as follows, referring to Table 5-1, Table 5-2 or Table 5-3. |
| | B22 to B24 | Disregard | 3 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

### Indicating 240 MHz, 480 MHz-1, 480 MHz-2, 640 MHz-1, and 640 MHz-2

Option 1-1: a combination of a value of a Bandwidth subfield and a 1-bit value of a Bandwidth Extension subfield, except for values that indicates the legacy bandwidth (20/40/80/160/320 MHz), is used for indication, referring to Table 5-1.

### Example:

**Table 5-1**

| Bandwidth Extension field | Bandwidth field | Bandwidth |
|---|---|---|
| 0 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | **6** | **240 MHz** |
| | **7** | **480 MHz-1** |
| 1 | **0** | **480 MHz-2** |
| | **1** | **640 MHz-1** |
| | **2** | **640 MHz-2** |
| | 3-7 | reserved |

Option 1-2: a combination of a value of an unused Bandwidth subfield and a 2-bit value of a Bandwidth Extension subfield is used for indication, referring to Table 5-2.

### Example:

**Table 5-2**

| Bandwidth Extension field | Bandwidth field | Bandwidth |
|---|---|---|
| 3 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | **6** | **240 MHz** |
| | **7** | **480 MHz-1** |
| 0 | 0~5 | reserved |
| | **6** | **480 MHz-2** |
| | **7** | **640 MHz-1** |
| 1 | 0~5 | reserved |
| | **6** | **640 MHz-2** |
| | 7 | reserved |
| 2 | 0~7 | reserved |

Option 2: a combination of values 3 to 5 of the Bandwidth subfield and a 2-bit value of the Bandwidth Extension subfield is used for indication, referring to Table 5-3.

### Example:

In a case where the value of the Bandwidth subfield is 3 and the value of the Bandwidth Extension subfield is 0, a 240 MHz bandwidth is indicated.

In a case where the value of the Bandwidth subfield is 4 and the value of the Bandwidth Extension subfield is 0, a 480 MHz-1 bandwidth is indicated.

In a case where the value of the Bandwidth subfield is 5 and the value of the Bandwidth Extension subfield is 0, a 480 MHz-2 bandwidth is indicated.

In a case where the value of the Bandwidth subfield is 4 and the value of the Bandwidth Extension subfield is 1, a 640 MHz-1 bandwidth is indicated.

In a case where the value of the Bandwidth subfield is 5 and the value of the Bandwidth Extension subfield is 1, a 640 MHz-2 bandwidth is indicated. Table 5-3

| Bandwidth Extension field | Bandwidth field | Bandwidth |
|---|---|---|
| 3 | 0 | 20 MHz |
| | 1 | 40 MHz |
| | 2 | 80 MHz |
| | 3 | 160 MHz |
| | 4 | 320 MHz-1 |
| | 5 | 320 MHz-2 |
| | 6~7 | Reserved |
| 0 | 0 | Reserved |
| | 1 | Reserved |
| | 2 | Reserved |
| | **3** | **240 MHz** |
| | **4** | **480 MHz-1** |
| | **5** | **480 MHz-2** |
| | 6~7 | Reserved |
| 1 | 0 | Reserved |
| | 1 | Reserved |
| | 2 | Reserved |
| | 3 | Reserved |
| | **4** | **640 MHz-1** |
| | **5** | **640 MHz-2** |
| | 6~7 | Reserved |
| 2 | 0~7 | Reserved |

### (2) Punching pattern of non-OFDMA PPDU

The embodiments of the present application respectively define puncturing patterns for non-OFDMA PPDU transmission in one of three bandwidths, two of three bandwidths, or three bandwidths, which are indicated by a Punctured Channel Information subfield (and the Punctured Channel Information subfield) in the U-SIG field.

### (a) A puncturing pattern of a non-OFDMA UHR PPDU with a bandwidth of 20/40/80/160/240/320 MHz

The UHR PPDU supports bandwidths of 20/40/80/160/240/320 MHz. The puncturing pattern of the non-OFDMA PPDU transmission is indicated by the Punctured Channel Information subfield in the U-SIG field, referring to Table 6.

**Table 6**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | B3 to B5 | Bandwidth | 3 | Indicate PPDU bandwidth. |
| | | | | Values 0 to 5 indicate 20 MHz/40 MHz/80 MHz/160 MHz/320 MHz-1/320 MHz-2. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B24 | Disregard | 5 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | Meanings of values 0 to 31 are as follows, and meanings of some values refer to Table 6-1. |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

In a case where the bandwidth is 20/40/80/160/320 MHz, a Punctured Channel Information subfield of a puncturing pattern indicating the non-OFDMA PPDU transmission has the same definition as in IEEE 802.11 be.

In a case where the bandwidth is 240 MHz, the Punctured Channel Information subfield of the puncturing pattern indicating the non-OFDMA PPDU transmission is defined as follows.

A puncturing granularity of 240 MHz non-OFDMA PPDU transmission is 20 MHz, and there are three cases.

### Case 1: no sub-channels puncturing

A value 0 of the Punctured Channel Information field indicates that no puncturing is performed.

### Case 2: a 20 MHz sub-channel puncturing

Values 1 to 12 of the Punctured Channel Information field indicate that the 1st to 12th 20 MHz sub-channels (from low to high in frequency) are punctured, and correspond to 12 types of MRUs, for example: 2×996+484+242-tone MRU 1 to 12.

### Case 3: a 40 MHz sub-channel puncturing

Values 13 to 18 of the Punctured Channel Information field indicate that the 1st to 6th 40 MHz sub-channels (from low to high in frequency) are punctured, and correspond to 6 types of MRUs, for example: 2×996+484-tone MRU 1 to 6.

Values 19 to 31 of the Punctured Channel Information field are reserved.

As shown in Table 6-1, "1" represents an unpunctured 20 MHz sub-channel, and "x" represents a punctured 20 MHz sub-channel.

**Table 6-1 The Punctured Channel Information for 240 MHz non-OFDMA PPDU transmission in U-SIG**

| PPDU bandwidth | Cases | Puncturing pattern (RU or MRU Index) | Field value |
|---|---|---|---|
| 240 MHz | No puncturing | [1 1 1 1 1 1 1 1 1 1 1 1] | 0 |
| | | (3×996-tone RU 1) | |
| | 20 MHz puncturing | [x 1 1 1 1 1 1 1 1 1 1 1] | 1 |
| | | (2×996+484+242-tone MRU 1) | |
| | | [1 x 1 1 1 1 1 1 1 1 1 1] | 2 |
| | | (2×996+484+242-tone MRU 2) | |
| | | [1 1 x 1 1 1 1 1 1 1 1 1] | 3 |
| | | (2×996+484+242-tone MRU 3) | |
| | | [1 1 1 x 1 1 1 1 1 1 1 1] | 4 |
| | | (2×996+484+242-tone MRU 4) | |
| | | [1 1 1 1 x 1 1 1 1 1 1 1] | 5 |
| | | (2×996+484+242-tone MRU 5) | |
| | | [1 1 1 1 1 x 1 1 1 1 1 1] | 6 |
| | | (2×996+484+242-tone MRU 6) | |
| | | [1 1 1 1 1 1 x 1 1 1 1 1] | 7 |
| | | (2×996+484+242-tone MRU 7) | |
| | | [1 1 1 1 1 1 1 x 1 1 1 1] | 8 |
| | | (2×996+484+242-tone MRU 8) | |
| | | [1 1 1 1 1 1 1 1 x 1 1 1] | 9 |
| | | (2×996+484+242-tone MRU 19) | |
| | | [1 1 1 1 1 1 1 1 1 x 1 1] | 10 |
| | | (2×996+484+242-tone MRU 10) | |
| | | [1 1 1 1 1 1 1 1 1 1 x 1] | 11 |
| | | (2×996+484+242-tone MRU 11) | |
| | | [1 1 1 1 1 1 1 1 1 1 1 x] | 12 |
| | | (2×996+484+242-tone MRU 12) | |
| | 40 MHz puncturing | [x x 1 1 1 1 1 1 1 1 1 1] | 13 |
| | | (2×996+484-tone MRU 1) | |
| | | [1 1 x x 1 1 1 1 1 1 1 1] | 14 |
| | | (2×996+484-tone MRU 2) | |
| | | [1111 xx 111111] | 15 |
| | | (2×996+484-tone MRU 3) | |
| | | [1 1 1 1 1 1 x x 1 1 1 1] | 16 |
| | | (2×996+484-tone MRU 4) | |
| | | [1 1 1 1 1 1 1 1 x x 1 1] | 17 |
| | | (2×996+484-tone MRU 5) | |
| | | [1 1 1 1 1 1 1 1 1 1 x x] | 18 |
| | | (2×996+484-tone MRU 6) | |

### (b) A puncturing pattern of a non-OFDMA UHR PPDU with a bandwidth of 20/40/80/160/320/480 MHz

The UHR PPDU supports bandwidths of 20/40/80/160/320/480 MHz. The puncturing pattern of the non-OFDMA PPDU transmission is indicated by a combination of the Punctured Channel Information subfield and the Punctured Channel Information Extension subfield in the U-SIG field, referring to Table 7.

**Table 7**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | B3 to B5 | Bandwidth | 3 | Indicate PPDU bandwidth. |
| | | | | Values 0 to 5 indicate 20 MHz/40 MHz/80 MHz/160 MHz/320 MHz-1/320 MHz-2. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B24 | Disregard | 5 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | Meanings of values 0 to 31 are as follows, referring to Table 7-1. |
| | B8 | Punctured Channel Information Extension | 1 | Meanings of values 0 to 1 are as follows, referring to Table 7-1. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

In a case where the bandwidth is 20/40/80/160/320 MHz, a Punctured Channel Information subfield of a puncturing pattern indicating the non-OFDMA PPDU transmission has the same definition as in IEEE 802.11 be, and a value of the Punctured Channel Information Extension subfield is set to be reserved.

In a case where the bandwidth is 480 MHz, the Punctured Channel Information subfield and the Punctured Channel Information Extension subfield of the puncturing pattern indicating the non-OFDMA PPDU transmission are defined as follows.

A puncturing granularity of 480 MHz non-OFDMA PPDU transmission is 40 MHz, and there are four cases.

### Case 1: no sub-channels puncturing

A value 0 of the Punctured Channel Information Extension field and a value 0 of the Punctured Channel Information field indicate that no puncturing is performed.

### Case 2: a 40 MHz sub-channel puncturing

A value 0 of the Punctured Channel Information Extension field and values 1 to 12 of the Punctured Channel Information field indicate that the 1st to 12th 40 MHz sub-channels (from low to high in frequency) are punctured, and correspond to 12 types of MRUs, for example: 5×996+484-tone MRU 1 to 12.

### Case 3: an 80 MHz sub-channel puncturing

A value 0 of the Punctured Channel Information Extension field and values 13 to 18 of the Punctured Channel Information field indicate that the 1st to 6th 80 MHz sub-channels (from low to high in frequency) are punctured, and correspond to 6 types of MRUs, for example: 5×996-tone MRU 1 to 6.

### Case 4: concurrent 80 MHz sub-channel and 40 MHz sub-channel puncturing

A value 0 of the Punctured Channel Information Extension field and values 19 to 28 of the Punctured Channel Information field indicate that the first 80 MHz sub-channel is punctured, and then the 1st to 10th 40 MHz sub-channels (from low to high in frequency) are punctured in the remaining 400 MHz bandwidth and correspond to 10 types of MRUs, for example: 4×996+484-tone MRU 11 to 20.

A value 0 of the Punctured Channel Information Extension field and values 29 to 31 of the Punctured Channel Information field indicate that the sixth 80 MHz sub-channel is punctured, and then the 1st to 3rd 40 MHz sub-channels (from low to high in frequency) are punctured in the remaining 400 MHz bandwidth and correspond to 3 types of MRUs, for example: 4×996+484-tone MRU 1 to 3.

A value1 of the Punctured Channel Information Extension field and values 0 to 6 of the Punctured Channel Information field indicate that the sixth 80 MHz sub-channel is punctured, and then the 4th to 10th 40 MHz sub-channels (from low to high in frequency) are punctured in the remaining 400 MHz bandwidth and correspond to 7 types of MRUs, for example: 4×996+484-tone MRU 4 to 10.

A value 1 of the Punctured Channel Information Extension field and values 7 to 31 of the Punctured Channel Information field are reserved.

As shown in Table 7-1, "1" represents an unpunctured 40 MHz sub-channel, and "x" represents a punctured 40 MHz sub-channel.

**Table 7-1 The Punctured Channel Information field and the Punctured Channel Information Extension field for 480 MHz non-OFDMA PPDU transmission in U-SIG**

| PPDU bandwidth | Cases | Puncturing pattern (RU or MRU Index) | Punctured Channel Information Field value | Punctured Channel Information Extension Field value |
|---|---|---|---|---|
| 480 MHz | No puncturing | [1 1 1 1 1 1 1 1 1 1 1 1] (6×996-tone RU 1) | 0 | 0 |
| | 40 MHz puncturing (440 MHz) | [x 1 1 1 1 1 1 1 1 1 1 1] (5×996+484-tone MRU 1) | 1 | |
| | | [1 x 1 1 1 1 1 1 1 1 1 1] (5×996+484-tone MRU 2) | 2 | |
| | | [1 1 x 1 1 1 1 1 1 1 1 1] (5×996+484-tone MRU 3) | 3 | |
| | | [1 1 1 x 1 1 1 1 1 1 1 1] (5×996+484-tone MRU 4) | 4 | |
| | | [1111x1111111] | 5 | |
| | | (5×996+484-tone MRU 5) | | |
| | | [1 1 1 1 1 x 1 1 1 1 1 1] (5×996+484-tone MRU 6) | 6 | |
| | | [1 1 1 1 1 1 x 1 1 1 1 1] (5×996+484-tone MRU 7) | 7 | |
| | | [1 1 1 1 1 1 1 x 1 1 1 1] (5×996+484-tone MRU 8) | 8 | |
| | | [1 1 1 1 1 1 1 1 x 1 1 1] (5×996+484-tone MRU 19) | 9 | |
| | | [1 1 1 1 1 1 1 1 1 x 1 1] (5×996+484-tone MRU 10) | 10 | |
| | | [1 1 1 1 1 1 1 1 1 1 x 1] (5×996+484-tone MRU 11) | 11 | |
| | | [1 1 1 1 1 1 1 1 1 1 1 x] (5×996+484-tone MRU 12) | 12 | |
| | 80 MHz puncturing (400 MHz) | [x x 1 1 1 1 1 1 1 1 1 1] (5×996-tone MRU 1) | 13 | |
| | | [11 xx 1111 1 1 1 1] (5×996-tone MRU 2) | 14 | |
| | | [1 1 1 1 x x 1 1 1 1 1 1] (5×996-tone MRU 3) | 15 | |
| | | [1 1 1 1 1 1 x x 1 1 1 1] (5×996-tone MRU 4) | 16 | |
| | | [1 1 1 1 1 1 1 1 xx 11] (5×996-tone MRU 5) | 17 | |
| | | [1 1 1 1 1 1 1 1 1 1 x x] (5×996-tone MRU 6) | 18 | |
| | Concurrent 40 MHz and | [x x x 1 1 1 1 1 1 1 1 1] (4×996+484-tone MRU 11) | 19 | |
| | 80 MHz puncturing (360 MHz) | [x x 1 x 1 1 1 1 1 1 1 1] (4×996+484-tone MRU 12) | 20 | |
| | | [x x 1 1 x 1 1 1 1 1 1 1] (4×996+484-tone MRU 13) | 21 | |
| | | [x x 1 1 1 x 1 1 1 1 1 1] (4×996+484-tone MRU 14) | 22 | |
| | | [x x 1 1 1 1 x 1 1 1 1 1] (4×996+484-tone MRU 15) | 23 | |
| | | [x x 1 1 1 1 1 x 1 1 1 1] (4×996+484-tone MRU 16) | 24 | |
| | | [x x 1 1 1 1 1 1 x 1 1 1] (4×996+484-tone MRU 17) | 25 | |
| | | [x x 1 1 1 1 1 1 1 x 1 1] (4×996+484-tone MRU 18) | 26 | |
| | | [x x 1 1 1 1 1 1 1 1 x 1] | 27 | |
| | | (4×996+484-tone MRU 19) | | |
| | | [x x 1 1 1 1 1 1 1 1 1 x] | 28 | |
| | | (4×996+484-tone MRU 20) | | |
| | | [x 1 1 1 1 1 1 1 1 1 x x] | 29 | |
| | | (4×996+484-tone MRU 1) | | |
| | | [1 x 1 1 1 1 1 1 1 1 x x] | 30 | |
| | | (4×996+484-tone MRU 2) | | |
| | | [1 1 x 1 1 1 1 1 1 1 x x] | 31 | |
| | | (4×996+484-tone MRU 3) | | |
| | | [1 1 1 x 1 1 1 1 1 1 x x] (4×996+484-tone MRU 4) | 0 | 1 |
| | | [1 1 1 1 x 1 1 1 1 1 x x] (4×996+484-tone MRU 5) | 1 | |
| | | [1 1 1 1 1 x 1 1 1 1 x x] (4×996+484-tone MRU 6) | 2 | |
| | | [1 1 1 1 1 1 x 1 1 1 x x] (4×996+484-tone MRU 7) | 3 | |
| | | [1 1 1 1 1 1 1 x 1 1 x x] (4×996+484-tone MRU 8) | 4 | |
| | | [1 1 1 1 1 1 1 1 x 1 x x] (4×996+484-tone MRU 9) | 5 | |
| | | [1 1 1 1 1 1 1 1 1 x x x] (4×996+484-tone MRU 10) | 6 | |

### (c) A puncturing pattern of a non-OFDMA UHR PPDU with a bandwidth of 20/40/80/160/320/640 MHz

The UHR PPDU supports bandwidths of 20/40/80/160/320/640 MHz. The puncturing pattern of the non-OFDMA PPDU transmission is indicated by the Punctured Channel Information subfield in the U-SIG field, referring to Table 8.

**Table 8**

| Two parts of U-SIG | Bit | Field | Number of bits | Description |
|---|---|---|---|---|
| U-SIG-1 | B0 to B2 | PHY Version Identifier | 3 | Differentiate between different PHY clauses. |
| | B3 to B5 | Bandwidth | 3 | Indicate PPDU bandwidth. |
| | | | | Values 0 to 5 indicate 20 MHz/40 MHz/80 MHz/160 MHz/320 MHz-1/320 MHz-2. |
| | B6 | UL/DL | 1 | Indicates whether the PPDU is sent in UL or DL. |
| | B7 to B12 | BSS Color | 6 | An identifier of the BSS. |
| | B13 to B19 | TXOP | 7 | Indicate duration information for NAV setting and protection of the TXOP. |
| | B20 to B24 | Disregard | 5 | Set to all 1s and treat as Disregard. |
| | B25 | Validate | 1 | Set to 1 and treat as Validate. |
| U-SIG-2 | B0 to B1 | PPDU Type And Compression Mode | 2 | |
| | B2 | Validate | 1 | Set to 1 and treat as Validate. |
| | B3 to B7 | Punctured Channel Information | 5 | Meanings of values 0 to 31 are as follows, and meanings of some values refer to Table 8-1. |
| | B8 | Validate | 1 | Set to 1 and treat as Validate. |
| | B9 to B10 | UHR-SIG MCS | 2 | Indicates the MCS used for modulating the UHR-SIG. |
| | B11 to B15 | Number Of UHR-SIG Symbols | 5 | Indicates the number of UHR-SIG symbols. |
| | B16 to B19 | CRC | 4 | |
| | B20 to B25 | Tail | 6 | |

In a case where the bandwidth is 20/40/80/160/320 MHz, a Punctured Channel Information subfield of a puncturing pattern indicating the non-OFDMA PPDU transmission has the same definition as in IEEE 802.11 be.

In a case where the bandwidth is 640 MHz, the Punctured Channel Information subfield of the puncturing pattern indicating the non-OFDMA PPDU transmission is defined as follows.

A puncturing granularity of 640 MHz non-OFDMA PPDU transmission is 80 MHz, and there are four specific cases.

### Case 1: no sub-channels puncturing

A value 0 of the Punctured Channel Information field indicates that no puncturing is performed.

### Case 2: an 80 MHz sub-channel puncturing

Values 1 to 8 of the Punctured Channel Information field indicate that the 1st to 8th 80 MHz sub-channels (from low to high in frequency) are punctured, and correspond to 8 types of MRUs, for example: 7×996-tone MRU 1 to 8.

### Case 3: a 160 MHz sub-channel puncturing

Values 9 to 12 of the Punctured Channel Information field indicate that the 1st to 4th 160 MHz sub-channels (from low to high in frequency) are punctured, and correspond to 4 types of MRUs, for example: 6×996-tone MRU 1 to 4.

### Case 4: concurrent 160 MHz sub-channel and 80 MHz sub-channel puncturing

Values 13 to 18 of the Punctured Channel Information field indicate that the first 160 MHz sub-channel is punctured, and then the 1th to 6th 80 MHz sub-channels (from low to high in frequency) are punctured in the remaining 480 MHz sub-channels and correspond to 6 types of MRUs, for example: 5×996-tone MRU 7 to 12.

Values 19 to 24 of the Punctured Channel Information field indicate that the fourth 160 MHz sub-channel is punctured, and then the 1th to 6th 80 MHz sub-channels (from low to high in frequency) are punctured in the remaining 480 MHz sub-channels and correspond to 6 types of MRUs, for example: 5×996-tone MRU 1 to 6.

Values 25 to 31 of the Punctured Channel Information field are reserved.

As shown in Table 8-1, "1" represents an unpunctured 80 MHz sub-channel, and "x" represents a punctured 80 MHz sub-channel.

**Table 8-1 The Punctured Channel Information for 640 MHz non-OFDMA PPDU transmission in U-SIG**

| PPDU bandwidth | Cases | Puncturing pattern (RU or MRU Index) | Field value |
|---|---|---|---|
| 640 MHz | No puncturing | [1 1 1 1 1 1 1 1] (8×996-tone RU 1) | 0 |
| | 80 MHz puncturing (560 MHz) | [x 1 1 1 1 1 1 1] (7×996-tone MRU 1) | 1 |
| | | [1 x 1 1 1 1 1 1] (7×996-tone MRU 2) | 2 |
| | | [1 1 x 1 1 1 1 1] (7×996-tone MRU 3) | 3 |
| | | [1 1 1 x 1 1 1 1] (7×996-tone MRU 4) | 4 |
| | | [1 1 1 1 x 1 1 1] (7×996-tone MRU 5) | 5 |
| | | [1 1 1 1 1 x 1 1] (7×996-tone MRU 6) | 6 |
| | | [1 1 1 1 1 1 x 1] (7×996-tone MRU 7) | 7 |
| | | [1 1 1 1 1 1 1 x] (7×996-tone MRU 8) | 8 |
| | 160 MHz puncturing (480 MHz) | [x x 1 1 1 1 1 1] (6×996-tone MRU 1) | 9 |
| | | [1 1 x x 1 1 1 1] (6×996-tone MRU 2) | 10 |
| | | [1 1 1 1 x x 1 1] (6×996-tone MRU 3) | 11 |
| | | [1 1 1 1 1 1 xx] (6×996-tone MRU 4) | 12 |
| | Concurrent 80 MHz and | [x x x 1 1 1 1 1] (5×996-tone MRU 7) | 13 |
| | 160 MHz puncturing (400 MHz) | [x x 1 x 1 1 1 1] (5×996-tone MRU 8) | 14 |
| | | [x x 1 1 x 1 1 1] (5×996-tone MRU 9) | 15 |
| | | [x x 1 1 1 x 1 1] (5×996-tone MRU 10) | 16 |
| | | [x x 1 1 1 1 x 1] (5×996-tone MRU 11) | 17 |
| | | [x x 1 1 1 1 1 x] (5×996-tone MRU 12) | 18 |
| | | [x 11111 xx] (5×996-tone MRU 1) | 19 |
| | | [1 x 1 1 1 1 x x] (5×996-tone MRU 2) | 20 |
| | | [1 1 x 1 1 1 x x] (5×996-tone MRU 3) | 21 |
| | | [1 1 1 x 1 1 x x] (5×996-tone MRU 4) | 22 |
| | | [1 1 1 1 x 1 xx] (5×996-tone MRU 5) | 23 |
| | | [1 1 1 1 1 x x x] (5×996-tone MRU 6) | 24 |

### (d) A puncturing pattern of a non-OFDMA UHR PPDU with a bandwidth of 20/40/80/160/240/320/480 MHz

The UHR PPDU supports bandwidths of 20/40/80/160/240/320/480 MHz. The puncturing pattern of the non-OFDMA PPDU transmission is indicated by a combination of the Punctured Channel Information subfield and the Punctured Channel Information Extension subfield in the U-SIG field.

In a case where the bandwidth is 20/40/80/160/320 MHz, a Punctured Channel Information subfield of a puncturing pattern indicating the non-OFDMA PPDU transmission has the same definition as in IEEE 802.11 be, and a value of the Punctured Channel Information Extension subfield is set to be reserved.

In a case where the bandwidth is 240 MHz, the meaning of the Punctured Channel Information subfield of the puncturing pattern indicating the non-OFDMA PPDU transmission may refer to an item (a) of the puncturing pattern of the non-OFDMA PPDU, and a value of the Punctured Channel Information Extension subfield is set to be reserved.

In a case where the bandwidth is 480 MHz, the meanings of the Punctured Channel Information subfield and the Punctured Channel Information Extension subfield of the puncturing pattern indicating the non-OFDMA PPDU transmission may refer to an item (b) of the puncturing pattern of the non-OFDMA PPDU.

### (e) A puncturing pattern of a non-OFDMA UHR PPDU with a bandwidth of 20/40/80/160/240/320/640 MHz

The UHR PPDU supports bandwidths of 20/40/80/160/240/320/640 MHz. The puncturing pattern of the non-OFDMA PPDU transmission is indicated by the Punctured Channel Information subfield in the U-SIG field.

In a case where the bandwidth is 20/40/80/160/320 MHz, a Punctured Channel Information subfield of a puncturing pattern indicating the non-OFDMA PPDU transmission has the same definition as in IEEE 802.11 be.

In a case where the bandwidth is 240 MHz, the meaning of the Punctured Channel Information subfield of the puncturing pattern indicating the non-OFDMA PPDU transmission may refer to an item (a) of the puncturing pattern of the non-OFDMA PPDU.

In a case where the bandwidth is 640 MHz, the meaning of the Punctured Channel Information subfield of the puncturing pattern indicating the non-OFDMA PPDU transmission may refer to an item (c) of the puncturing pattern of the non-OFDMA PPDU.

### (f) A puncturing pattern of a non-OFDMA UHR PPDU with a bandwidth of 20/40/80/160/320/640 MHz

The UHR PPDU supports bandwidths of 20/40/80/160/320/480/640 MHz. The puncturing pattern of the non-OFDMA PPDU transmission is indicated by a combination of the Punctured Channel Information subfield and the Punctured Channel Information Extension subfield in the U-SIG field.

In a case where the bandwidth is 20/40/80/160/320 MHz, a Punctured Channel Information subfield of a puncturing pattern indicating the non-OFDMA PPDU transmission has the same definition as in IEEE 802.11 be, and a value of the Punctured Channel Information Extension subfield is set to be reserved.

In a case where the bandwidth is 480 MHz, the meanings of the Punctured Channel Information subfield and the Punctured Channel Information Extension subfield of the puncturing pattern indicating the non-OFDMA PPDU transmission may refer to an item (b) of the puncturing pattern of the non-OFDMA PPDU.

In a case where the bandwidth is 640 MHz, the meaning of the Punctured Channel Information subfield of the puncturing pattern indicating the non-OFDMA PPDU transmission may refer to an item (c) of the puncturing pattern of the non-OFDMA PPDU, and a value of the Punctured Channel Information Extension subfield is set to be reserved.

### (g) A puncturing pattern of a non-OFDMA UHR PPDU with a bandwidth of 20/40/80/160/240/320/480/640 MHz

The UHR PPDU supports bandwidths of 20/40/80/160/240/320/480/640 MHz. The puncturing pattern of the non-OFDMA PPDU transmission is indicated by a combination of the Punctured Channel Information subfield and the Punctured Channel Information Extension subfield in the U-SIG field.

In a case where the bandwidth is 20/40/80/160/320 MHz, a Punctured Channel Information subfield of a puncturing pattern indicating the non-OFDMA PPDU transmission has the same definition as in IEEE 802.11 be, and a value of the Punctured Channel Information Extension subfield is set to be reserved.

In a case where the bandwidth is 240 MHz, the meaning of the Punctured Channel Information subfield of the puncturing pattern indicating the non-OFDMA PPDU transmission may refer to an item (a) of the puncturing pattern of the non-OFDMA PPDU, and a value of the Punctured Channel Information Extension subfield is set to be reserved.

In a case where the bandwidth is 480 MHz, the meanings of the Punctured Channel Information subfield and the Punctured Channel Information Extension subfield of the puncturing pattern indicating the non-OFDMA PPDU transmission may refer to an item (b) of the puncturing pattern of the non-OFDMA PPDU.

In a case where the bandwidth is 640 MHz, the meaning of the Punctured Channel Information subfield of the puncturing pattern indicating the non-OFDMA PPDU transmission may refer to an item (c) of the puncturing pattern of the non-OFDMA PPDU, and a value of the Punctured Channel Information Extension subfield is set to be reserved.

FIG. 8 is a schematic structural diagram of a communication device 800 according to the embodiments of the present application. The communication device 800 includes a processor 810, and the processor 810 may call a computer program from a memory and run the computer program to enable the communication device 800 to implement the method in the embodiments of the present application.

In an implementation, the communication device 800 may further include a memory 820. The processor 810 may call a computer program from the memory 820 and run the computer program, so as to enable the communication device 800 to implement the method in the embodiments of the present application.

The memory 820 may be a separate device independent from the processor 810, or may be integrated into the processor 810.

In an implementation, the communication device 800 may further include a transceiver 830, and the processor 810 may control the transceiver 830 to communicate with other devices, specifically, may transmit information or data to other devices or receive information or data transmitted by other devices.

The transceiver 830 may include a transmitter and a receiver. The transceiver 830 may further include an antenna, and the number of the antenna(s) may be one or more.

In an implementation, the communication device 800 may be a station in the embodiments of the present application, and the communication device 800 may implement corresponding processes implemented by the station in various methods in the embodiments of the present application, and details are not repeated here for the sake of brevity.

In an implementation, the communication device 800 may be a station in the embodiments of the present application, and the communication device 800 may implement corresponding processes implemented by the station in various methods in the embodiments of the present application, and details are not repeated here for the sake of brevity.

FIG. 9 is a schematic structural diagram of a chip 900 according to the embodiments of the present application. The chip 900 includes a processor 910, and the processor 910 may call a computer program from a memory and run the computer program to implement the method in the embodiments of the present application.

In an implementation, the chip 900 may further include a memory 920. The processor 910 may call a computer program from the memory 920 and run the computer program to implement the method performed by the station or the station in the embodiments of the present application.

The memory 920 may be a separate device independent from the processor 910, or may be integrated into the processor 910.

In an implementation, the chip 900 may further include an input interface 930. The processor 910 may control the input interface 930 to communicate with other devices or chips, specifically, may obtain information or data transmitted by other devices or chips.

In an implementation, the chip 900 may further include an output interface 940. The processor 910 may control the output interface 940 to communicate with other devices or chips, specifically, may output information or data to other devices or chips.

In an implementation, the chip may be applied to the station in the embodiments of the present application, and the chip may implement corresponding processes implemented by the station in various methods in the embodiments of the present application, and details are not repeated here for the sake of brevity.

In an implementation, the chip may be applied to the station in the embodiments of the present application, and the chip may implement corresponding processes implemented by the station in various methods in the embodiments of the present application, and details are not repeated here for the sake of brevity.

The chips applied to the station and the station may be the same chip or different chips.

It should be understood that the chip mentioned in the embodiments of the present application may also be called a system-level chip, a system chip, a chip system, a system-on-chip, or the like.

The processor above-mentioned may be a general-purpose processor, a digital signal processor (DSP), a field programmable gate array (FPGA), an application specific integrated circuit (ASIC) or other programmable logic devices, a transistor logic device, a discrete hardware component, or the like. The general purpose processor mentioned above may be a microprocessor or any conventional processor.

The memory above-mentioned may be a volatile (transitory) memory or a non-volatile (non-transitory) memory, or may include both volatile and non-volatile memories. Here, the non-volatile memory may be a read-only memory (ROM), a programmable ROM (PROM), an erasable programmable read-only memory (erasable PROM, EPROM), an electrically erasable programmable read-only memory (electrically EPROM, EEPROM), or a flash memory. The volatile memory may be a random access memory (RAM).

It should be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present application is intended to include but is not limited to these and any other suitable types of memory.

FIG. 10 is a schematic block diagram of a communication system 1000 according to the embodiments of the present application. The communication system 1000 includes a first station 1010 and a second station 1020.

The first station 1010 may be configured to implement corresponding functions implemented by the non-AP station in the above method, the second station 1020 may be configured to implement corresponding functions implemented by the AP station in the above method, and details are not repeated here for the sake of brevity.

The first station 1010 may be configured to implement corresponding functions implemented by the first station in the above method, and the second station 1020 may be configured to implement corresponding functions implemented by the second station in the above method, and details are not repeated here for the sake of brevity.

The above embodiments may be implemented in whole or in part through software, hardware, firmware, or any combination thereof. When implemented by using software, the software may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium accessible by the computer, or may be a data storage device such as a server or a data center that includes one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

The above content is only specific implementations of the present application, but the protection scope of the present application is not limited thereto, and any skilled person in the art could readily conceive of changes or replacements within the technical scope of the present application, which shall all be included in the protection scope of the present application. Therefore, the protection scope of the present application shall be subject to the protection scope of the claims.

## Claims

1. A communication method, comprising:
transmitting and/or receiving, by a station, first information, wherein the first information is used to indicate bandwidth information and/or punctured information of a transmission resource.

2. The method according to claim 1, wherein the first information comprises first bandwidth indication information and/or second bandwidth indication information.

3. The method according to claim 2, wherein the first bandwidth indication information and/or the second bandwidth indication information are used to indicate the bandwidth information of the transmission resource, and the transmission resource is used to transmit a data packet.

4. The method according to claim 2 or 3, wherein a manner of the first information indicating newly added bandwidth information comprises at least one of:
that a value of the first bandwidth indication information indicates the newly added bandwidth information;
that a value of the second bandwidth indication information indicates the newly added bandwidth information; or
that combined value(s) constituted by the value of the first bandwidth indication information and the value of the second bandwidth indication information indicates the newly added bandwidth information; wherein a number of the combined value(s) is the same as a number of newly added bandwidths.

5. The method according to claim 4, wherein the value of the first bandwidth indication information comprises an unoccupied value and/or an occupied related bandwidth value.

6. The method according to any one of claims 3 to 5, wherein a manner of the first information indicating a type of newly added bandwidth information comprises at least one of:
that an unoccupied value of the first bandwidth indication information indicates a first bandwidth;
that a value of the second bandwidth indication information indicates the first bandwidth;
that a combined value constituted by the unoccupied value of the first bandwidth indication information and the value of the second bandwidth indication information indicates the first bandwidth; or
that a combined value constituted by a related bandwidth value of the first bandwidth indication information and the value of the second bandwidth indication information indicates the first bandwidth.

7. The method according to any one of claims 3 to 5, wherein a manner of the first information indicating two types of newly added bandwidth information comprises at least one of:
that unoccupied values of the first bandwidth indication information indicate a first bandwidth and a second bandwidth, respectively;
that values of the second bandwidth indication information indicate the first bandwidth and the second bandwidth, respectively;
that two combined values constituted by the unoccupied values of the first bandwidth indication information and a value of the second bandwidth indication information indicate the first bandwidth and the second bandwidth, respectively; or
that two combined values constituted by related bandwidth values of the first bandwidth indication information and a value of the second bandwidth indication information indicate the first bandwidth and the second bandwidth, respectively.

8. The method according to any one of claims 3 to 5, wherein a manner of the first information indicating three types of newly added bandwidth information comprises at least one of:
that three combined values constituted by unoccupied values of the first bandwidth indication information and values of the second bandwidth indication information indicate a first bandwidth, a second bandwidth and a third bandwidth, respectively; or
that three combined values constituted by related bandwidth values of the first bandwidth indication information and a value of the second bandwidth indication information indicate the first bandwidth, the second bandwidth and the third bandwidth, respectively.

9. The method according to any one of claims 3 to 5, wherein a manner of the first information indicating four types of newly added bandwidth information comprises at least one of:
that four combined values constituted by unoccupied values of the first bandwidth indication information and an at least 1-bit value of the second bandwidth indication information indicate a first bandwidth, a second bandwidth, a third bandwidth and a fourth bandwidth, respectively; or
that four combined values constituted by related bandwidth values of the first bandwidth indication information and an at least 2-bit value of the second bandwidth indication information indicate the first bandwidth, the second bandwidth, the third bandwidth and the fourth bandwidth, respectively.

10. The method according to any one of claims 3 to 5, wherein a manner of the first information indicating five types of newly added bandwidth information comprises at least one of:
that five combined values constituted by unoccupied values of the first bandwidth indication information, related bandwidth values of the first bandwidth indication information, and an at least 1-bit value of the second bandwidth indication information indicate a first bandwidth, a second bandwidth, a third bandwidth, a fourth bandwidth and a fifth bandwidth, respectively;
that five combined values constituted by unoccupied values of the first bandwidth indication information and an at least 2-bit value of the second bandwidth indication information indicate the first bandwidth, the second bandwidth, the third bandwidth, the fourth bandwidth and the fifth bandwidth, respectively; or
that five combined values constituted by related bandwidth values of the first bandwidth indication information and an at least 2-bit value of the second bandwidth indication information indicate the first bandwidth, the second bandwidth, the third bandwidth, the fourth bandwidth and the fifth bandwidth, respectively.

11. The method according to any one of claims 1 to 10, wherein the bandwidth information of the transmission resource comprises at least one of following newly added bandwidth information:
a bandwidth of a 240 MHz channel, a bandwidth of a 480 MHz channel, or a bandwidth of a 640 MHz channel.

12. The method according to claim 11, wherein the bandwidth of the 480 MHz channel comprises a bandwidth of a first 480 MHz channel and a bandwidth of a second 480 MHz channel.

13. The method according to claim 11, wherein the bandwidth of the 640 MHz channel comprises a bandwidth of a first 640 MHz channel and a bandwidth of a second 640 MHz channel.

14. The method according to claim 11, wherein a manner of the first information indicating the bandwidth of the 240 MHz channel comprises at least one of:
that an unoccupied value of first bandwidth indication information indicates the bandwidth of the 240 MHz channel;
that a value of second bandwidth indication information indicates the bandwidth of the 240 MHz channel;
that an unoccupied value of the first bandwidth indication information and a value of the second bandwidth indication information jointly indicate the bandwidth of the 240 MHz channel; or
that a related bandwidth value of the first bandwidth indication information and a value of the second bandwidth indication information jointly indicate the bandwidth of the 240 MHz channel.

15. The method according to claim 11 or 12, wherein a manner of the first information indicating the bandwidth of the 480 MHz channel comprises at least one of:
that two unoccupied values of first bandwidth indication information indicate a bandwidth of a first 480 MHz channel and a bandwidth of a second 480 MHz channel, respectively;
that values of second bandwidth indication information indicate the bandwidth of the first 480 MHz channel and the bandwidth of the second 480 MHz channel, respectively;
that two combined values constituted by two unoccupied values of the first bandwidth indication information and a value of the second bandwidth indication information indicate the bandwidth of the first 480 MHz channel and the bandwidth of the second 480 MHz channel, respectively; or
that two combined values constituted by two related bandwidth values of the first bandwidth indication information and a value of the second bandwidth indication information indicate the bandwidth of the first 480 MHz channel and the bandwidth of the second 480 MHz channel, respectively.

16. The method according to claim 11 or 13, wherein a manner of the first information indicating the bandwidth of the 640 MHz channel comprises at least one of:
that two unoccupied values of first bandwidth indication information indicate a bandwidth of a first 640 MHz channel and a bandwidth of a second 640 MHz channel, respectively;
that values of second bandwidth indication information indicate the bandwidth of the first 640 MHz channel and the bandwidth of the second 640 MHz channel, respectively;
that two combined values constituted by two unoccupied values of the first bandwidth indication information and a value of the second bandwidth indication information indicate the bandwidth of the first 640 MHz channel and the bandwidth of the second 640 MHz channel, respectively; or
that two combined values constituted by two related bandwidth values of the first bandwidth indication information and a value of the second bandwidth indication information indicate the bandwidth of the first 640 MHz channel and the bandwidth of the second 640 MHz channel, respectively.

17. The method according to claim 11 or 12, wherein a manner of the first information indicating the bandwidth of the 240 MHz channel and the bandwidth of the 480 MHz channel comprises at least one of:
that three combined values constituted by two unoccupied values of first bandwidth indication information and a 1-bit value of second bandwidth indication information indicate the bandwidth of the 240 MHz channel, a bandwidth of a first 480 MHz channel and a bandwidth of a second 480 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 480 MHz channel and the bandwidth of the second 480 MHz channel, respectively.

18. The method according to claim 11 or 13, wherein a manner of the first information indicating the bandwidth of the 240 MHz channel and the bandwidth of the 640 MHz channel comprises at least one of:
that three combined values constituted by two unoccupied values of first bandwidth indication information and a 1-bit value of second bandwidth indication information indicate the bandwidth of the 240 MHz channel, a bandwidth of a first 640 MHz channel and a bandwidth of a second 640 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 640 MHz channel and the bandwidth of the second 640 MHz channel, respectively.

19. The method according to any one of claims 11 to 13, wherein a manner of the first information indicating the bandwidth of the 480 MHz channel and the bandwidth of the 640 MHz channel comprises at least one of:
that four combined values constituted by two unoccupied values of first bandwidth indication information and 1-bit values of second bandwidth indication information indicate a bandwidth of a first 480 MHz channel, a bandwidth of a second 480 MHz channel, a bandwidth of a first 640 MHz channel and a bandwidth of a second 640 MHz channel, respectively; or
that four combined values constituted by two related bandwidth values of the first bandwidth indication information and a 2-bit value of the second bandwidth indication information indicate the bandwidth of the first 480 MHz channel, the bandwidth of the second 480 MHz channel, the bandwidth of the first 640 MHz channel and the bandwidth of the second 640 MHz channel, respectively.

20. The method according to any one of claims 11 to 13, wherein a manner of the first information indicating the bandwidth of the 240 MHz channel, the bandwidth of the 480 MHz channel and the bandwidth of the 640 MHz channel comprises at least one of:
that five combined values constituted by two unoccupied values of first bandwidth indication information and a 2-bit value of second bandwidth indication information indicate the bandwidth of the 240 MHz channel, a bandwidth of a first 480 MHz channel, a bandwidth of a second 480 MHz channel, a bandwidth of a first 640 MHz channel and a bandwidth of a second 640 MHz channel, respectively;
that five combined values constituted by two unoccupied values of the first bandwidth indication information, three related bandwidth values of the first bandwidth indication information, and a 1-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively; or
that five combined values constituted by three related bandwidth values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively.

21. The method according to any one of claims 2 to 20, wherein the first information comprises first punctured channel information and/or second punctured channel information.

22. The method according to claim 21, wherein the first punctured channel information and/or the second punctured channel information are used to indicate a puncturing granularity and a puncturing pattern of a channel bandwidth.

23. The method according to claim 21 or 22, wherein different puncturing patterns correspond to different multiple resource units (MRUs).

24. The method according to any one of claims 21 to 23, wherein a channel bandwidth of the transmission resource is 240 MHz, and a manner of the first information indicating the punctured information comprises at least one of:
no sub-channels puncturing;
a 20 MHz sub-channel puncturing, wherein a value of the first punctured channel information indicates that an MRU corresponding to the 20 MHz is punctured in a frequency order in a bandwidth of 240 MHz channel; or
a 40 MHz sub-channel puncturing, wherein a value of the first punctured channel information indicates that a corresponding MRU is punctured in the frequency order in the bandwidth of the 240 MHz channel.

25. The method according to any one of claims 21 to 23, wherein a channel bandwidth of the transmission resource is 480 MHz, and a manner of the first information indicating the punctured information comprises at least one of:
no sub-channels puncturing;
a 40 MHz sub-channel puncturing, wherein a value of the first punctured channel information and a value of the second punctured channel information jointly indicate that an MRU corresponding to the 40 MHz sub-channel is punctured in a frequency order in a bandwidth of a 480 MHz channel;
an 80 MHz sub-channel puncturing, wherein the value of the first punctured channel information and the value of the second punctured channel information jointly indicate that an MRU corresponding to the 80 MHz sub-channel is punctured in the frequency order in the bandwidth of the 480 MHz channel; or
concurrent 80MHz sub-channel and 40MHz sub-channel puncturing, wherein the value of the first punctured channel information and the value of the second punctured channel information jointly indicate that MRUs corresponding to the 80MHz sub-channel and the 40MHz sub-channel are punctured in the bandwidth of the 480MHz channel.

26. The method according to claim 25, wherein the value of the first punctured channel information and the value of the second punctured channel information jointly indicating that the MRUs corresponding to the 80 MHz sub-channel and the 40 MHz sub-channel are punctured in the bandwidth of the 480 MHz channel comprises:
that the value of the first punctured channel information and the value of the second punctured channel information jointly indicate that an MRU corresponding to an 80 MHz sub-channel is punctured arbitrarily in the bandwidth of the 480 MHz channel; and
that the value of the first punctured channel information and the value of the second punctured channel information jointly indicate that an MRU corresponding to a first 80 MHz sub-channel or a last 80 MHz sub-channel is punctured in the bandwidth of the 480MHz channel, and then an MRU corresponding to any 40 MHz sub-channel is punctured in remaining bandwidth.

27. The method according to any one of claims 21 to 23, wherein a channel bandwidth of the transmission resource is 640 MHz, and a manner of the first information indicating the punctured information comprises at least one of:
no sub-channels puncturing;
an 80 MHz sub-channel puncturing, wherein a value of the first punctured channel information and a value of the second punctured channel information jointly indicate that an MRU corresponding to the 80 MHz sub-channel is punctured in a frequency order in a bandwidth of a 640 MHz channel;
a 160 MHz sub-channel puncturing, wherein the value of the first punctured channel information and the value of the second punctured channel information jointly indicate that an MRU corresponding to the 160 MHz sub-channel is punctured in the frequency order in the bandwidth of the 640 MHz channel; or
concurrent 160MHz sub-channel and 80MHz sub-channel puncturing, wherein the value of the first punctured channel information and the value of the second punctured channel information jointly indicate that MRUs corresponding to the 160MHz sub-channel and the 80MHz sub-channel are punctured in the bandwidth of the 640MHz channel.

28. The method according to claim 27, wherein the value of the first punctured channel information and the value of the second punctured channel information jointly indicating that the MRUs corresponding to the 160 MHz sub-channel and the 80 MHz sub-channel are punctured in the bandwidth of the 640 MHz channel comprises:
that the value of the first punctured channel information and the value of the second punctured channel information jointly indicate that an MRU corresponding to the 160 MHz sub-channel and the 80 MHz sub-channel is punctured arbitrarily in the bandwidth of the 640 MHz channel; and
that the value of the first punctured channel information and the value of the second punctured channel information jointly indicate that an MRU corresponding to a first 160MHz sub-channel or a last 160MHz sub-channel is punctured in the bandwidth of the 640MHz channel, and then an MRU corresponding to any 80MHz sub-channel is punctured in remaining bandwidth.

29. The method according to any one of claims 2 to 10 or 14 to 20, wherein the first bandwidth indication information is a bandwidth subfield in a universal signal (U-SIG) field; and
the second bandwidth indication information is a bandwidth extension subfield in the U-SIG field.

30. The method according to any one of claims 21 to 28, wherein the first punctured channel information is a punctured channel information subfield in a U-SIG field; and
the second punctured channel information is a punctured channel information extension subfield in the U-SIG field.

31. The method according to claim 29 or 30, wherein the U-SIG field is in an ultra-high reliability (UHR) physical layer protocol data unit (PPDU).

32. The method according to claim 31, wherein the UHR PPDU is a UHR multi-user (MU) PPDU and/or a UHR trigger based (TB) PPDU.

33. The method according to any one of claims 29 to 32, wherein the U-SIG field comprises information for indicating a UHR physical layer (PHY) version.

34. The method according to claim 33, wherein a PHY version identifier subfield in the U-SIG field is used to indicate the information of the UHR PHY version.

35. The method according to any one of claims 1 to 34, wherein a data packet transmitted by the transmission resource is a non-orthogonal frequency division multiple access (non-OFDMA) UHR PPDU.

36. A station, comprising:
a processing unit, configured to transmit and/or receive first information, wherein the first information is used to indicate bandwidth information and/or punctured information of a transmission resource.

37. The station according to claim 36, wherein the first information comprises first bandwidth indication information and/or second bandwidth indication information.

38. The station according to claim 37, wherein the first bandwidth indication information and/or the second bandwidth indication information are used to indicate the bandwidth information of the transmission resource, and the transmission resource is used to transmit a data packet.

39. The station according to claim 37 or 38, wherein a manner of the first information indicating newly added bandwidth information comprises at least one of:
that a value of the first bandwidth indication information indicates the newly added bandwidth information;
that a value of the second bandwidth indication information indicates the newly added bandwidth information; or
that combined value(s) constituted by the value of the first bandwidth indication information and the value of the second bandwidth indication information indicates the newly added bandwidth information; wherein a number of the combined value(s) is the same as a number of newly added bandwidths.

40. The station according to claim 39, wherein the value of the first bandwidth indication information comprises an unoccupied value and/or an occupied related bandwidth value.

41. The station according to any one of claims 38 to 40, wherein a manner of the first information indicating a type of newly added bandwidth information comprises at least one of:
that an unoccupied value of the first bandwidth indication information indicates a first bandwidth;
that a value of the second bandwidth indication information indicates the first bandwidth;
that a combined value constituted by the unoccupied value of the first bandwidth indication information and the value of the second bandwidth indication information indicates the first bandwidth; or
that a combined value constituted by a related bandwidth value of the first bandwidth indication information and the value of the second bandwidth indication information indicates the first bandwidth.

42. The station according to any one of claims 38 to 40, wherein a manner of the first information indicating two types of newly added bandwidth information comprises at least one of:
that unoccupied values of the first bandwidth indication information indicate a first bandwidth and a second bandwidth, respectively;
that values of the second bandwidth indication information indicate the first bandwidth and the second bandwidth, respectively;
that two combined values constituted by the unoccupied values of the first bandwidth indication information and a value of the second bandwidth indication information indicate the first bandwidth and the second bandwidth, respectively; or
that two combined values constituted by related bandwidth values of the first bandwidth indication information and a value of the second bandwidth indication information indicate the first bandwidth and the second bandwidth, respectively.

43. The station according to any one of claims 38 to 40, wherein a manner of the first information indicating three types of newly added bandwidth information comprises at least one of:
that three combined values constituted by unoccupied values of the first bandwidth indication information and values of the second bandwidth indication information indicate a first bandwidth, a second bandwidth and a third bandwidth, respectively; or
that three combined values constituted by related bandwidth values of the first bandwidth indication information and a value of the second bandwidth indication information indicate the first bandwidth, the second bandwidth and the third bandwidth, respectively.

44. The station according to any one of claims 38 to 40, wherein a manner of the first information indicating four types of newly added bandwidth information comprises at least one of:
that four combined values constituted by unoccupied values of the first bandwidth indication information and an at least 1-bit value of the second bandwidth indication information indicate a first bandwidth, a second bandwidth, a third bandwidth and a fourth bandwidth, respectively; or
that four combined values constituted by related bandwidth values of the first bandwidth indication information and an at least 2-bit value of the second bandwidth indication information indicate the first bandwidth, the second bandwidth, the third bandwidth and the fourth bandwidth, respectively.

45. The station according to any one of claims 38 to 40, wherein a manner of the first information indicating five types of newly added bandwidth information comprises at least one of:
that five combined values constituted by unoccupied values of the first bandwidth indication information, related bandwidth values of the first bandwidth indication information, and an at least 1-bit value of the second bandwidth indication information indicate a first bandwidth, a second bandwidth, a third bandwidth, a fourth bandwidth and a fifth bandwidth, respectively;
that five combined values constituted by unoccupied values of the first bandwidth indication information and an at least 2-bit value of the second bandwidth indication information indicate the first bandwidth, the second bandwidth, the third bandwidth, the fourth bandwidth and the fifth bandwidth, respectively; or
that five combined values constituted by related bandwidth values of the first bandwidth indication information and an at least 2-bit value of the second bandwidth indication information indicate the first bandwidth, the second bandwidth, the third bandwidth, the fourth bandwidth and the fifth bandwidth, respectively.

46. The station according to any one of claims 36 to 45, wherein the bandwidth information of the transmission resource comprises at least one of following newly added bandwidth information:
a bandwidth of a 240 MHz channel, a bandwidth of a 480 MHz channel, or a bandwidth of a 640 MHz channel.

47. The station according to claim 46, wherein the bandwidth of the 480 MHz channel comprises a bandwidth of a first 480 MHz channel and a bandwidth of a second 480 MHz channel.

48. The station according to claim 46, wherein the bandwidth of the 640 MHz channel comprises a bandwidth of a first 640 MHz channel and a bandwidth of a second 640 MHz channel.

49. The station according to claim 46, wherein a manner of the first information indicating the bandwidth of the 240 MHz channel comprises at least one of:
that an unoccupied value of first bandwidth indication information indicates the bandwidth of the 240 MHz channel;
that a value of second bandwidth indication information indicates the bandwidth of the 240 MHz channel;
that an unoccupied value of the first bandwidth indication information and a value of the second bandwidth indication information jointly indicate the bandwidth of the 240 MHz channel; or
that a related bandwidth value of the first bandwidth indication information and a value of the second bandwidth indication information jointly indicate the bandwidth of the 240 MHz channel.

50. The station according to claim 46 or 47, wherein a manner of the first information indicating the bandwidth of the 480 MHz channel comprises at least one of:
that two unoccupied values of first bandwidth indication information indicate a bandwidth of a first 480 MHz channel and a bandwidth of a second 480 MHz channel, respectively;
that values of second bandwidth indication information indicate the bandwidth of the first 480 MHz channel and the bandwidth of the second 480 MHz channel, respectively;
that two combined values constituted by two unoccupied values of the first bandwidth indication information and a value of the second bandwidth indication information indicate the bandwidth of the first 480 MHz channel and the bandwidth of the second 480 MHz channel, respectively; or
that two combined values constituted by two related bandwidth values of the first bandwidth indication information and a value of the second bandwidth indication information indicate the bandwidth of the first 480 MHz channel and the bandwidth of the second 480 MHz channel, respectively.

51. The station according to claim 46 or 48, wherein a manner of the first information indicating the bandwidth of the 640 MHz channel comprises at least one of:
that two unoccupied values of first bandwidth indication information indicate a bandwidth of a first 640 MHz channel and a bandwidth of a second 640 MHz channel, respectively;
that values of second bandwidth indication information indicate the bandwidth of the first 640 MHz channel and the bandwidth of the second 640 MHz channel, respectively;
that two combined values constituted by two unoccupied values of the first bandwidth indication information and a value of the second bandwidth indication information indicate the bandwidth of the first 640 MHz channel and the bandwidth of the second 640 MHz channel, respectively; or
that two combined values constituted by two related bandwidth values of the first bandwidth indication information and a value of the second bandwidth indication information indicate the bandwidth of the first 640 MHz channel and the bandwidth of the second 640 MHz channel, respectively.

52. The station according to claim 46 or 47, wherein a manner of the first information indicating the bandwidth of the 240 MHz channel and the bandwidth of the 480 MHz channel comprises at least one of:
that three combined values constituted by two unoccupied values of first bandwidth indication information and a 1-bit value of second bandwidth indication information indicate the bandwidth of the 240 MHz channel, a bandwidth of a first 480 MHz channel and a bandwidth of a second 480 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 480 MHz channel and the bandwidth of the second 480 MHz channel, respectively.

53. The station according to claim 46 or 48, wherein a manner of the first information indicating the bandwidth of the 240 MHz channel and the bandwidth of the 640 MHz channel comprises at least one of:
that three combined values constituted by two unoccupied values of first bandwidth indication information and a 1-bit value of second bandwidth indication information indicate the bandwidth of the 240 MHz channel, a bandwidth of a first 640 MHz channel and a bandwidth of a second 640 MHz channel, respectively; or
that three combined values constituted by two related bandwidth values of the first bandwidth indication information and a 1-bit value of the second bandwidth indication information indicate the bandwidth of the 240 MHz channel, the bandwidth of the first 640 MHz channel and the bandwidth of the second 640 MHz channel, respectively.

54. The station according to any one of claims 46 to 48, wherein a manner of the first information indicating the bandwidth of the 480 MHz channel and the bandwidth of the 640 MHz channel comprises at least one of:
that four combined values constituted by two unoccupied values of first bandwidth indication information and 1-bit values of second bandwidth indication information indicate a bandwidth of a first 480 MHz channel, a bandwidth of a second 480 MHz channel, a bandwidth of a first 640 MHz channel and a bandwidth of a second 640 MHz channel, respectively; or
that four combined values constituted by two related bandwidth values of the first bandwidth indication information and a 2-bit value of the second bandwidth indication information indicate the bandwidth of the first 480 MHz channel, the bandwidth of the second 480 MHz channel, the bandwidth of the first 640 MHz channel and the bandwidth of the second 640 MHz channel, respectively.

55. The station according to any one of claims 46 to 48, wherein a manner of the first information indicating the bandwidth of the 240 MHz channel, the bandwidth of the 480 MHz channel and the bandwidth of the 640 MHz channel comprises at least one of:
that five combined values constituted by two unoccupied values of first bandwidth indication information and a 2-bit value of second bandwidth indication information indicate the bandwidth of the 240 MHz channel, a bandwidth of a first 480 MHz channel, a bandwidth of a second 480 MHz channel, a bandwidth of a first 640 MHz channel and a bandwidth of a second 640 MHz channel, respectively;
that five combined values constituted by two unoccupied values of the first bandwidth indication information, three related bandwidth values of the first bandwidth indication information, and a 1-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively; or
that five combined values constituted by three related bandwidth values of the first bandwidth indication information and a 2-bit value of the second bandwidth indication information indicate the bandwidth of the 240 MHz channel, the bandwidth of the first 480 MHz channel, the bandwidth of the second 480 MHz channel, the bandwidth of the first 640 MHz channel and the bandwidth of the second 640 MHz channel, respectively.

56. The station according to any one of claims 37 to 55, wherein the first information comprises first punctured channel information and/or second punctured channel information.

57. The station according to claim 56, wherein the first punctured channel information and/or the second punctured channel information are used to indicate a puncturing granularity and a puncturing pattern of a channel bandwidth.

58. The station according to claim 56 or 57, wherein different puncturing patterns correspond to different MRUs.

59. The station according to any one of claims 56 to 58, wherein a channel bandwidth of the transmission resource is 240 MHz, and a manner of the first information indicating the punctured information comprises at least one of:
no sub-channels puncturing;
a 20 MHz sub-channel puncturing, wherein a value of the first punctured channel information indicates that an MRU corresponding to the 20 MHz is punctured in a frequency order in a bandwidth of 240 MHz channel; or
a 40 MHz sub-channel puncturing, wherein a value of the first punctured channel information indicates that a corresponding MRU is punctured in the frequency order in the bandwidth of the 240 MHz channel.

60. The station according to any one of claims 56 to 58, wherein a channel bandwidth of the transmission resource is 480 MHz, and a manner of the first information indicating the punctured information comprises at least one of:
no sub-channels puncturing;
a 40 MHz sub-channel puncturing, wherein a value of the first punctured channel information and a value of the second punctured channel information jointly indicate that an MRU corresponding to the 40 MHz sub-channel is punctured in a frequency order in a bandwidth of a 480 MHz channel;
an 80 MHz sub-channel puncturing, wherein the value of the first punctured channel information and the value of the second punctured channel information jointly indicate that an MRU corresponding to the 80 MHz sub-channel is punctured in the frequency order in the bandwidth of the 480 MHz channel; or
concurrent 80MHz sub-channel and 40MHz sub-channel puncturing, wherein the value of the first punctured channel information and the value of the second punctured channel information jointly indicate that MRUs corresponding to the 80MHz sub-channel and the 40MHz sub-channel are punctured in the bandwidth of the 480MHz channel.

61. The station according to claim 60, wherein the value of the first punctured channel information and the value of the second punctured channel information jointly indicating that the MRUs corresponding to the 80 MHz sub-channel and the 40 MHz sub-channel are punctured in the bandwidth of the 480 MHz channel comprises:
that the value of the first punctured channel information and the value of the second punctured channel information jointly indicate that an MRU corresponding to an 80 MHz sub-channel is punctured arbitrarily in the bandwidth of the 480 MHz channel; and
that the value of the first punctured channel information and the value of the second punctured channel information jointly indicate that an MRU corresponding to a first 80 MHz sub-channel or a last 80 MHz sub-channel is punctured in the bandwidth of the 480MHz channel, and then an MRU corresponding to any 40 MHz sub-channel is punctured in remaining bandwidth.

62. The station according to any one of claims 56 to 58, wherein a channel bandwidth of the transmission resource is 640 MHz, and a manner of the first information indicating the punctured information comprises at least one of:
no sub-channels puncturing;
an 80 MHz sub-channel puncturing, wherein a value of the first punctured channel information and a value of the second punctured channel information jointly indicate that an MRU corresponding to the 80 MHz sub-channel is punctured in a frequency order in a bandwidth of a 640 MHz channel;
a 160 MHz sub-channel puncturing, wherein the value of the first punctured channel information and the value of the second punctured channel information jointly indicate that an MRU corresponding to the 160 MHz sub-channel is punctured in the frequency order in the bandwidth of the 640 MHz channel; or
concurrent 160MHz sub-channel and 80MHz sub-channel puncturing, wherein the value of the first punctured channel information and the value of the second punctured channel information jointly indicate that MRUs corresponding to the 160MHz sub-channel and the 80MHz sub-channel are punctured in the bandwidth of the 640MHz channel.

63. The station according to claim 62, wherein the value of the first punctured channel information and the value of the second punctured channel information jointly indicating that the MRUs corresponding to the 160 MHz sub-channel and the 80 MHz sub-channel are punctured in the bandwidth of the 640 MHz channel comprises:
that the value of the first punctured channel information and the value of the second punctured channel information jointly indicate that an MRU corresponding to the 160 MHz sub-channel and the 80 MHz sub-channel is punctured arbitrarily in the bandwidth of the 640 MHz channel; and
that the value of the first punctured channel information and the value of the second punctured channel information jointly indicate that an MRU corresponding to a first 160MHz sub-channel or a last 160MHz sub-channel is punctured in the bandwidth of the 640MHz channel, and then an MRU corresponding to any 80MHz sub-channel is punctured in remaining bandwidth.

64. The station according to any one of claims 37 to 45 or 49 to 55, wherein the first bandwidth indication information is a bandwidth subfield in a U-SIG field; and
the second bandwidth indication information is a bandwidth extension subfield in the U-SIG field.

65. The station according to any one of claims 56 to 63, wherein the first punctured channel information is a punctured channel information subfield in a U-SIG field; and
the second punctured channel information is a punctured channel information extension subfield in the U-SIG field.

66. The station according to claim 64 or 65, wherein the U-SIG field is in a UHR PPDU.

67. The station according to claim 66, wherein the UHR PPDU is a UHR MU PPDU and/or a UHR TB PPDU.

68. The station according to any one of claims 64 to 67, wherein the U-SIG field comprises information for indicating a UHR PHY version.

69. The station according to claim 68, wherein a PHY version identifier subfield in the U-SIG field is used to indicate the information of the UHR PHY version.

70. The station according to any one of claims 36 to 69, wherein a data packet transmitted by the transmission resource is a non-OFDMA UHR PPDU.

71. A communication device, comprising: a processor and a memory, wherein the memory is configured to store a computer program, and the processor is configured to call the computer program stored in the memory and run the computer program to enable the communication device to perform the method according to any one of claims 1 to 35.

72. A chip, comprising: a processor configured to call a computer program from a memory and run the computer program to enable a device equipped with the chip to perform the method according to any one of claims 1 to 35.

73. A computer-readable storage medium, configured to store a computer program, wherein when being run by a device, the computer program enables the device to perform the method according to any one of claims 1 to 35.

74. A computer program product, comprising computer program instructions, wherein the computer program instructions enable a computer to perform the method according to any one of claims 1 to 35.

75. A computer program, enabling a computer to perform the method according to any one of claims 1 to 35.
